# EUROPÄISCHE PATENTANMELDUNG

(11) **EP 4 324 366 A1**
(43) Veröffentlichungstag der Anmeldung: **21.02.2024**
(21) Anmeldenummer: 22190521.9
(22) Anmeldetag: 16.08.2022
(51) Int. Cl.: A47J 43/27, B65D 51/28

(54) **TRINKGEFÄSS**

(71) Anmelder: VILSA-BRUNNEN Otto Rodekohr GmbH, 27305 Bruchhausen-Vilsen (DE)
(72) Erfinder: Rodekohr, Henning, 27305 Bruchhausen-Vilsen (DE); Behrendt, Lars, 27798 Hude (DE); Esselborn, Stefan, 29223 Celle (DE)
(74) Vertreter: Vossius & Partner Patentanwälte Rechtsanwälte mbB

(57) **Zusammenfassung**

Trinkgefäß mit einem ersten Sieb und einem zweiten Sieb, wobei das erste Sieb und das zweite Sieb gemeinsam einen Hohlraum definieren, welcher dazu geeignet ist, ein Pad mit Zusatzstoffen aufzunehmen, die dem Getränk individuellen Geschmack und/oder eine individuelle Wirkung verleihen, sowie ein entsprechendes Set und ein Verfahren zur Zubereitung eines Getränks.

## Beschreibung

Die vorliegende Erfindung betrifft ein Trinkgefäß, insbesondere eine verschließbare Trinkflasche zur Aufnahme von kalten Flüssigkeiten, insbesondere von wasserhaltigen Flüssigkeiten, die mit individuellen Zusatzstoffen versehen sein können.

Wasser, insbesondere natürliches Mineralwasser, ist allgemein wichtig für eine gesunde und ausgewogene Ernährung. Reines Trinkwasser ist jedoch relativ geschmacklos und dient primär dazu, Durst zu stillen. Es gibt jedoch bei zahlreichen Menschen und in vielen Branchen das Bedürfnis, über die Flüssigkeitsaufnahme nicht nur den Durst zu stillen, sondern gleichzeitig etwas Wohlschmeckendes zu sich zu nehmen und/oder dem Körper darüber hinaus weitere Stoffe zuzuführen, die beispielsweise leistungssteigernde und/oder gesundheitsfördernde Wirkung haben. Daher sind industriell hergestellte Fruchtsaftgetränke, Soft- und Energydrinks, isotonische Getränke sowie der Einsatz von Vitamintabletten oder auch Proteinpulver weit verbreitet. Diese Getränke werden in der Regel in Einoder Mehrwegflaschen gehandelt, sind mit einem Mindesthaltbarkeitsdatum versehen, enthalten Stoffe, welche für eine industrielle Herstellung notwendig, allerdings nicht in jedem Fall vom Konsumenten gewünscht sind und sind bezüglich ihrer Inhaltsstoffe nicht variabel individualisierbar.

Aus der Fitnessindustrie ist eine Vielzahl an wiederverwendbaren Trinkflaschen, sogenannte Shaker bekannt, welche es dem Konsumenten ermöglichen, eine individuelle Dosis an wasserlöslichem Pulver mit individuell wählbarem Geschmack und Inhaltsstoff, beispielsweise Proteinpulver mit Schokoladengeschmack, mit Wasser zu vermengen, um dadurch eine geschmackvolle Flüssigkeit, welche weitere Inhaltsstoffe, hier Protein, enthält, genießen zu können. Beispielhaft sei der ESN SHAKER der Firma Fitmart GmbH & Co. KG, 25337 Elmshorn, Deutschland, oder der ProStak der Firma BlenderBottle Europe Benley GmbH, 49356 Diepholz, Deutschland, genannt. Die Shaker funktionieren alle nach dem gleichen Prinzip: Der Konsument misst mit Hilfe eines Messlöffels oder einer im Shaker befindlichen Skala eine definierte Menge des gewünschten Pulvers ab und vermischt im Shaker durch Schütteln das Pulver mit Wasser. Um eine gute Durchmischung zu gewährleisten, enthalten die Shaker ein Sieb, sodass beim Schütteln und Vermischen des Getränks keine Pulverklumpen entstehen. In jedem Fall ist es bei der Verwendung der Shaker notwendig, die gewünschten Zusatzstoffe als wasserlösliches Pulver bereitzustellen und der Anwender muss Pulver bei jeder Verwendung individuell in Bezug auf die eingesetzte Wassermenge dosieren, was als aufwendig und dadurch nachteilig empfunden wird.

Es sind weiterhin Systeme bekannt, die nicht dazu vorgesehen sind, den kompletten Flascheninhalt mit weiteren Zusatz- oder Geschmackstoffen zu versehen, sondern erst beim Ausgießen aus einer Flasche den Geschmack von Getränken zu verändern.

WO 2014/152492 A1 offenbart, insbesondere für alkoholische Getränke, einen Ausgießer mit einer darin angeordneten zweiteiligen Kammer. Im oberen Teil der Kammer ist ein wasserlöslicher Aromastoff in fester Form enthalten, der untere Teil der Kammer definiert ein davon getrenntes Ablassvolumen. Beim Ausgießen der Flasche fließt Flüssigkeit durch den oberen Teil der Kammer und nimmt Geschmack des darin angeordneten Aromastoffs auf. Wird die Flasche, nachdem ein Teil des Inhalts ausgegossen ist, wieder aufrecht gestellt, fließt die noch im oberen Teil enthaltene Flüssigkeit in das Ablassvolumen ab und wird mittels eines Ventils im Ablassvolumen gehalten und daran gehindert, in die Flasche zurückzufließen.

WO 2011/133577 A2 offenbart einen Flaschenverschluss, der mit einem Auslass eines Flüssigkeitsbehälters koppelbar ist. Der Flaschenverschluss umfasst eine Kammer, in welche auflösbare Festkörper eingebracht werden können. Die Kammer ist derart gestaltet, dass die auflösbaren Festkörper in der Kammer gehalten werden, die Kammer jedoch beim Leeren des Flüssigkeitsbehälters von einer genügend großen Menge Flüssigkeit durchströmt wird, sodass die Körper sich in der Flüssigkeit auflösen und dabei Nahrungsergänzungsmittel an die Flüssigkeit abgeben. Ferner weist der Flaschenverschluss eine Filteranordnung auf, sodass Flüssigkeit aus dem Behälter zuerst gefiltert wird und anschließend durch die Kammer fließt.

Diese Systeme haben den Nachteil, dass eine genaue Dosierung der Inhaltsstoffe in die Flüssigkeit nicht möglich ist, da einerseits die Ausgießgeschwindigkeit, andererseits die Oberflächen der aufzulösenden Körper variieren. Zusätzlich ist es auch für diese Konzepte notwendig, die Zusatzstoffe in definierter Form, nämlich als wasserlösliche Festkörper mit definierten Oberflächen, verfügbar zu haben, was insbesondere die Anwendung mit natürlichen Zusatzstoffen einschränkt.

Der Bedarf nach einer nachhaltigen Möglichkeit, natürliches Mineralwasser auf einfache Weise schnell und genau dosierbar zu individualisieren und dadurch den Genuss und/oder den Effekt der Flüssigkeitsaufnahme für den Anwender zu erhöhen, lässt sich aus dem Stand der Technik nicht decken.

Es ist daher eine Aufgabe der vorliegenden Erfindung, eine wiederverwendbare Wasserflasche bereitzustellen, welche den Stand der Technik zumindest in Bezug auf Nachhaltigkeit, Handhabung sowie Individualisierbarkeit von Getränken, insbesondere von Mineralwasser, verbessert.

Diese Aufgabe wird von der vorliegenden Erfindung erfüllt durch ein Trinkgefäß mit einem Flüssigkeitsbehälter, einem Deckel, einem ersten Sieb und einem zweiten Sieb, wobei das erste Sieb und das zweite Sieb gemeinsam einen Hohlraum definieren, welcher insbesondere dazu geeignet ist, ein Pad mit Zusatzstoffen aufzunehmen, wobei der Hohlraum eine minimale Breite aufweist, die mindestens dreimal, bevorzugt mindestens fünfmal, besonders bevorzugt mindestens achtmal so groß ist wie eine maximale Höhe des Hohlraums. Mit anderen Worten ist der Hohlraum insbesondere dazu geeignet, ein einzelnes Pad aufzunehmen, welches bevorzugt Zusatzstoffe enthält.

Die Verwendung eines Pads ermöglicht es, eine Vielfalt an Zusatzstoffen zusammen mit Wasser zu vermengen. Insbesondere kann ein Pad Zusatzstoffe enthalten, die bei einer industriellen Produktion von Wasser mit Geschmack oder anderen Inhaltsstoffen nicht verwendet werden. Dies ist auch deshalb möglich, weil die im Pad enthaltenen Zusatzstoffe nicht maschinentauglich sein müssen, wie es bei der industriellen Getränkeherstellung gefordert ist und was insbesondere für den Einsatz von Schwebstoffen problematisch ist.

Es ist daher möglich, Getränke herzustellen, die industriel gar nicht herstellbar wären. Außerdem kann zumindest teilweise auf den Einsatz von Stabilisatoren und/oder Konservierungsstoffen verzichtet werden. Die Individualisierung von Wasser mittels eines Pads ermöglicht dem Anwender daher frisches, qualitativ hochwertiges Wasser, bevorzugt Mineralwasser, direkt vor dem Konsum zu individualisieren und dadurch noch besser auf seine Bedürfnisse wie beispielsweise Geschmack oder, bevorzugt leistungssteigernde oder schmerzlindernde, Wirkung anzupassen. Im Pad kann eine große Vielfalt an Zusatzstoffen verfügbar sein, da es nahezu keine Beschränkungen bezüglich möglicher Verarbeitungsformen gibt. Insbesondere ist es nicht erforderlich, dass die Zusatzstoffe in wasserlöslicher Pulverform vorliegen, wie es beispielsweise für den Einsatz in Shakern notwendig wäre.

Das Trinkgefäß kann eine beliebige Form aufweisen, insbesondere kann das Trinkgefäß in etwa zylinderförmig sein und den Querschnitt eines Polygons, eines Ovals oder besonders bevorzugt eines Kreises aufweisen.

Bevorzugt kann die Höhe des Trinkgefäßes größer sein als die Breite des Trinkgefäßes. Höhe und Breite des Trinkgefäßes werden in dem Zustand definiert, in dem das Trinkgefäß auf einem planen Untergrund steht. Die Höhe und die Breite der Siebe können definiert werden, wenn die Siebe auf einem planen Untergrund liegen oder in einem Zustand, in dem die Siebe in das Trinkgefäß eingesetzt sind und dieses auf einem planen Untergrund steht. Mit anderen Worten kann das Trinkgefäß bevorzugt in die Richtung, in der die Höhe eines Siebs oder des Hohlraums definiert ist, eine größere Ausdehnung aufweisen als in die Richtung, in der die Breite eines Siebs oder des Hohlraums definiert ist. Die Richtung der größten Ausdehnung des Trinkgefäßes kann in einem Winkel von 80° bis 100° zur Richtung der größten Ausdehnung des Trinkgefäßes stehen, bevorzugt kann die Richtung der größten Ausdehnung des Trinkgefäßes rechtwinklig zur Richtung der größten Ausdehnung des Trinkgefäßes orientiert sein.

Das erste und/oder das zweite Sieb können bevorzugt eine Grundfläche aufweisen, dessen Grundform ähnlich, bevorzugt identisch, zum Querschnitt des Trinkgefäßes ist. Besonders bevorzugt können die Siebe eine kreisrunde Grundfläche aufweisen.

Eine minimale Breite eines Körpers kann im Rahmen der Erfindung als kleinste minimale Breite aller Körperquerschnitte definiert sein. Die minimale breite eines Querschnitts kann definiert sein als Durchmesser des größten Kreises, welcher vollständig in dem Querschnitt liegt. Bei einem kreisförmigen Querschnitt kann die minimale Breite dem Durchmesser des Kreises entsprechen. Bei einem ovalen Querschnitt kann die minimale Breite entsprechend der kleinste Durchmesser des Ovals sein, bei einem elliptischen Querschnitt das Doppelte der kleinen Ellipsen-Halbachse. Weist ein Querschnitt ein Polygon auf, kann die minimale Breite dem Inkreis-Durchmesser entsprechen. Eine maximale Breite eines Körpers kann sich im Rahmen der Erfindung als die größte maximale Längenausdehnung aller Körperquerschnitte definieren lassen. Bei einem ovalen Querschnitt wäre die maximale Längenausdehnung der größte Durchmesser des Ovals, bei einem elliptischen Querschnitt das Doppelte der großen Ellipsen-Halbachse, bei einem kreisförmigen Querschnitt entspricht die maximale Längenausdehnung dem Durchmesser des Kreises und kann daher mit der minimalen Breite identisch sein.

Unter einem Flüssigkeitsbehälter sind generell Behältnisse zusammengefasst, welche geeignet sind, Flüssigkeiten zu sammeln. Neben Flaschen können dies insbesondere, aber nicht ausschließlich, Karaffen, Krüge, Schalen, Kannen oder Becher sein. Bevorzugt kann der Flüssigkeitsbehälter ein Volumen von mindestens 0,3 Litern, weiter bevorzugt mindestens 0,5 Litern, und besonders bevorzugt mindestens 0,75 Litern aufweisen. Bevorzugt kann der Flüssigkeitsbehälter ein Volumen von maximal 3 Litern, besonders bevorzugt maximal 2,5 Litern aufweisen. Der Flüssigkeitsbehälter kann bevorzugt derart gestaltet sein, dass er in einer Hand gehalten oder mit zwei Händen sicher gefasst werden kann. Bevorzugt kann der Flüssigkeitsbehälter lebensmittelechtes Material aufweisen, beispielsweise Glas, Edelstahl, Tritan, PET, PP, PC oder LDPE.

Unter lebensmittelechtem Material kann in Bezug auf die vorliegende Erfindung insbesondere Material bezeichnet werden, das gemäß der EU Rahmenverordnung (EG) Nr. 1935/2004 geeignet ist, mit Lebensmitteln in Berührung zu kommen.

Im Rahmen der vorliegenden Erfindung kann unter einem Sieb ein Werkzeug zum Trennen von festen und flüssigen Stoffen verstanden werden. Das erste und/oder zweite Sieb kann bevorzugt einen in etwa ebenen, leicht gewölbten oder aufgerauten Siebboden aufweisen, welcher definitionsgemäß mehrere Maschen, Durchbrüche oder Perforierungen aufweist. Bevorzugt kann das erste und/oder zweite Sieb einen kreisrunden Siebboden aufweisen, welcher bevorzugt in der Grundfläche oder parallel zur Grundfläche angeordnet ist. Das erste Sieb und/oder das zweite Sieb können einen Siebboden mit einer Fläche von je mindestens 900 mm², bevorzugt mindestens 1.200 mm² und besonders bevorzugt mindestens 1.500 mm² aufweisen. Die Maße der Siebbodenfläche können sich zwischen dem ersten und dem zweiten Sieb unterscheiden, sodass bevorzugt der Siebboden des zweiten Siebs 100 mm² bis 300 mm² größer ist als der Siebboden des ersten Siebs. Mit anderen Worten kann es bevorzugt sein, dass die Siebbodenflächen von zweitem und erstem Sieb in einem Verhältnis von 1,02 bis 1,15 zueinander stehen. Die Flächenunterschiede zwischen zweitem und erstem Sieb können in gleicher Art und Weise auch umgekehrt sein. Die bevorzugten Siebbodenabmessungen sind insbesondere in Kombination mit den bevorzugten Flüssigkeitsbehältervolumina besonders vorteilhaft, da - bei entsprechend zahlreicher Perforierung der Siebe - beim Schütteln des Trinkgefäßes in kurzer Zeit viel Wasser durch die Siebböden und somit durch ein zwischen den beiden Sieben liegendes Pad durchgesetzt werden kann.

Bevorzugt kann der zwischen den Sieben gebildete Hohlraum ebenfalls geeignet sein, Beeren oder mindestens ein Stück Obst oder Gemüse, beispielsweise Himbeeren, eine Scheibe Zitrone oder eine Scheibe Gurke, also allgemein ein Fruchtstück, aufzunehmen. Die bevorzugte Siebbodenfläche und damit auch die bevorzugte Grundfläche der Siebe ist ausreichend groß, um einerseits Pads, andererseits aber auch Scheiben von verschiedenen Obst-, Gemüse- oder Wurzelsorten sowie Kräuter oder Gewürze, welche gerne von Wasserkonsumenten verwendet werden, aufzunehmen. Dies können beispielsweise halbe oder ganze Scheiben von Zitronen, Orangen, Gurken oder Ingwer in handelsüblicher Größe sein. Der bevorzugte Flächenunterschied zwischen erstem und zweitem Sieb bietet den Vorteil, dass sich die Siebe ineinander einlegen lassen, um den Hohlraum zu bilden. Ferner ist das Größenverhältnis besonders geeignet, um ein ungewünschtes Verklemmen der Siebe zu vermeiden aber dennoch einen möglichst großen Siebboden zu gewährleisten. Die Grundflächen und/oder Siebböden der beiden Siebe können jedoch auch die gleiche Fläche oder Ausdehnung aufweisen.

Die Perforierungen können symmetrisch oder beliebig über den Siebboden verteilt sein. Bevorzugt kann ein kreisförmiger Siebboden mehrere Perforierungen aufweisen und die Größe und/oder die Anzahl der Perforierungen kann in radialer Richtung vom Mittelpunkt aus in Richtung Randbereich zunehmen. Jede Perforierung kann eine Querschnittsfläche zwischen 5 mm² und 50 mm², bevorzugt zwischen 10 mm² und 40 mm² aufweist. Bevorzugt können die Perforierungen in mindestens zwei, besonders bevorzugt in mindestens drei und maximal fünf Größen vorgesehen sein.

Das erste Sieb und/oder das zweite Sieb können bevorzugt jeweils mindestens 8, weiter bevorzugt mindestens 18, besonders bevorzugt mindestens 30 Perforierungen aufweisen. Bevorzugt können die Perforierungen eines jeden Siebes für sich genommen zusammen eine Gesamtfläche von mindestens 400 mm², bevorzugt mindestens 600 mm², besonders bevorzugt mindestens 800 mm² aufweisen. Mit anderen Worten können beide Siebe zusammen Perforierungen mit einer Fläche von mindestens 800 mm², bevorzugt mindestens 1200 mm², besonders bevorzugt mindestens 1600 mm² aufweisen. Bevorzugt kann sich die Gesamtfläche der Perforierungen zwischen erstem und zweitem Sieb unterscheiden. Bevorzugt kann die Gesamtfläche der Perforierungen des zweiten Siebs 30 mm² bis 150 mm² größer sein als die Gesamtfläche der Perforierungen des ersten Siebs. In anderen Worten ist bevorzugt, dass die Gesamtfläche der Perforierungen von zweitem und erstem Sieb in einem Verhältnis von 1,02 bis 1,15 zueinander stehen. Diese Ausgestaltung der Perforierungen ist insbesondere vorteilhaft, da somit beim Schütteln des Trinkgefäßes ein größtmöglicher Wasserdurchsatz einerseits erzielt werden kann, der Siebboden andererseits aber noch genügend Stützstruktur aufweist, um das Pad oder ein Fruchtstück sicher zu halten. Durch die vorteilhafte Ausgestaltung der Perforierungen können im Pad enthaltene Zusatzstoffe oder auch Geschmacksstoffe aus einem Fruchtstück in kurzer Zeit durch Schütteln des Trinkgefäßes in das im Trinkgefäß enthaltene Wasser abgegeben werden. Die Erfinder konnten zeigen, dass nach fünf- bis zehnmaligem Auf- und Abschütteln des Trinkgefäßes, also bereits nach wenigen Sekunden, insbesondere nach 5 bis 10 Sekunden, eine relevante und hinreichende Menge der Zusatzstoffe aus dem Pad in das Wasser diffundiert ist.

Der Siebboden kann bevorzugt von einem Rahmen umfasst sein, welcher sich in mindestens eine Richtung vom Siebboden weg und/oder von der Grundfläche weg erstreckt. Bevorzugt beträgt ein Winkel zwischen dem Siebboden oder der Grundfläche und dem Rahmen zwischen 45° und 110°, besonders bevorzugt zwischen 60° und 90°. Dadurch kann der Rahmen zusammen mit dem Siebboden eine Art Mulde bilden. Bevorzugt kann der Rahmen die Außenabmessungen des Siebes definieren, sodass die Rahmenhöhe der Siebhöhe entsprechen kann und die Rahmenbreite der Siebbreite. Der Rahmen kann verschiedene Breiten oder Durchmesser aufweisen, sodass der Innendurchmesser oder die Innenbreite des Rahmens in einer Ebene des Siebbodens einem Durchmesser oder einer Breite des Siebbodens entspricht und der Außendurchmesser oder die Außenbreite des Rahmens dem Grundflächendurchmesser oder der Grundflächenbreite in dieser Ebene entspricht. Der Rahmen kann in einer vom Siebboden beabstandeten Ebene einen größeren oder kleineren Innendurchmesser bzw. eine größere oder kleinere Innenbreite aufweist. Bevorzugt kann der Außendurchmesser oder die Außenbreite des Rahmens in Relation zum Innendurchmesser bzw. zur Innenbreite variieren. Mit anderen Worten kann die Wandstärke des Rahmens bevorzugt konstant sein und/oder die Siebbodenbreite kann die kleinste Innenbreite des Rahmens sein.

Bevorzugt kann das erste Sieb oder der Rahmen des ersten Siebs zumindest teilweise eine Breite aufweisen, die breiter ist als die Breite des zweiten Siebs und/oder das erste Sieb kann bevorzugt in das zweite Sieb eingesetzt werden. Bevorzugt können die beiden Siebe lösbar miteinander verbunden sein. Beispielsweise können die beiden Siebe lose ineinander liegen, ineinander geklemmt, gesteckt oder mittels eines Bajonett-Verschlusses oder eines Gewindes miteinander verbunden werden. Somit kann vorteilhaft eine leichte Zugänglichkeit zu dem von den Sieben gebildeten Hohlraum geschaffen werden, der einfach zu öffnen und zu schließen ist, um ein Pad einzulegen oder zu entnehmen, bzw. um das Trinkgefäß zu schließen und zu verwenden.

Der von den Sieben definierte Hohlraum kann bevorzugt eine Höhe von maximal 10 mm, besonders bevorzugt maximal 5 mm aufweisen. Der Hohlraum kann allein durch die beiden Siebe definiert und abgeschlossen sein oder es können weitere Komponenten zur Bildung des Hohlraums einbezogen oder verwendet werden. Bevorzugt können die beiden Siebe den Hohlraum zumindest nach oben und unten hin begrenzen.

Der Hohlraum kann bevorzugt ein Volumen zwischen 2.000 mm³ und 40.000 mm³, weiter bevorzugt zwischen 3.500 mm³ und 25.000 mm³und besonders bevorzugt zwischen 5.000 mm³ und 10.000 mm³ aufweisen. Bevorzugt entspricht das Verhältnis von Hohlraumvolumen zu der Gesamtfläche aller Perforierungen von erstem und zweitem Sieb zusammen 3 mm bis 6 mm, bevorzugt 4 mm bis 5 mm. Im Zusammenhang der vorliegenden Erfindung kann das Hohlraumvolumen definiert werden durch die Einhüllende, die von den hohlraumbildenden Komponenten, insbesondere der beiden Siebe, umschlossen wird. In anderen Worten können kleinere Lücken zwischen einzelnen, den Hohlraum bildenden Komponenten bei der Berechnung des Volumens ignoriert werden, also als geschlossen betrachtet werden. Die bevorzugten Hohlraumvolumina haben sich als besonders vorteilhaft erwiesen, um durch Schütteln des Trinkgefäßes bereits in kurzer Zeit das im Trinkgefäß enthaltene Wasser mit Zusatzstoffen aus einem im Hohlraum enthaltenen Pad oder Fruchtstück anzureichern. Zusätzlich kann das bevorzugte Hohlraumvolumen ideal in ein Trinkgefäß integriert werden, welches dennoch ein genügend großes Flüssigkeitsvolumen aufweist und gleichzeitig eine gute Handhabbarkeit durch begrenzte und akzeptable Außenabmessungen gewährleistet.

Bevorzugt kann das erste Sieb und/oder das zweite Sieb ein Griffelement aufweisen, besonders bevorzugt einen Griffhaken, eine Lasche, ein Muschelgriff oder eine Griffleiste. Bevorzugt kann das Griffelement am Rand des jeweiligen Siebs angeordnet sein und in einer Richtung senkrecht zur Grundfläche oder zum Siebboden des jeweiligen Siebs vorstehen. Bevorzugt kann das Griffelement derart am Sieb angebracht sein, dass es den Außendurchmesser oder die Außenbreite des Siebs bzw. des Siebrahmens nicht vergrößert. Das Griffelement kann einseitig oder beidseitig an einer Randkontur des Siebs bzw. des Siebrahmens angebracht sein und teilweise oder vollständig entlang der Randkontur verlaufen. Bevorzugt kann das Griffelement nur an einem Teil der Randkontur angebracht sein. Besonders bevorzugt kann das Griffelement nur entlang maximal eines Zehntels der Randkonturlänge oder des Randkonturumfangs, besonders bevorzugt entlang maximal eines Dreißigstels der Randkonturlänge oder des Randkonturumfangs verlaufen. Bevorzugt weist das Griffelement eine Breite oder einen Teildurchmesser auf, welcher groß genug ist, um das Griffelement mit einem Finger fassen zu können. Besonders bevorzugt kann die Breite oder der Teildurchmesser mindestens 5 mm betragen. Bevorzugt kann das Griffelement in Richtung der Siebmitte gebogen oder abgeknickt sein, sodass ein Teil des Griffelements in etwa parallel zum Siebboden oder zur Grundfläche verläuft. Bevorzugt ist der Teil des Griffelements, welcher parallel zur Grundfläche oder zum Siebboden verläuft, mindestens 5 mm von dem Siebboden des Siebes beabstandet. Dadurch wird eine gute Zugänglichkeit an das Griffelement und damit an das Sieb gewährleistet, da das Sieb beispielsweise mit einem Finger am Griffelement aus einem Hohlraum herausgezogen werden kann.

Bevorzugt können die Griffelemente am ersten und am zweiten Sieb unterschiedlich weit vom jeweiligen Siebboden beabstandet sein, sodass, wenn ein Sieb in das andere gesetzt werden sollte, die Teile der Griffelemente, welche parallel zu den Siebböden verlaufen, in etwa in einer Ebene sind. Dadurch kann der Raum, den beide Siebe zusammen im Trinkgefäß einnehmen vorteilhaft verkleinert werden, ohne die Zugänglichkeit zu den Sieben zu beeinflussen.

Bevorzugt können das erste und/oder das zweite Sieb aus einem Teil gefertigt sein, bevorzugt durch Urformen oder Umformen mit einem oder einer Kombination aus bekannten Fertigungsverfahren, wie beispielsweise Pressen, Stanzen, Tiefziehen, Spritzgießen, Sintern oder additiven Fertigungsverfahren. Bevorzugt können die Siebe aus Blech oder Kunststoff hergestellt werden. Bevorzugt können die Siebe formstabil sein. Es ist ferner möglich, dass die Siebe aus mehreren Teilen und/oder aus mehreren unterschiedlichen Materialien bestehen und/oder flexibel sind. Bevorzugt können die Siebe aus einem lebensmittelechten Material gefertigt sein, bevorzugt können die Siebe eines oder eine Kombination der folgenden Materialien bzw. Materialgruppen aufweisen: Edelstahl, Silikone, Tritan, PP, PC, PE, LDPE, PET, PTFE.

Das erste Sieb kann bevorzugt in einer definierten Ebene im Flüssigkeitsbehälter gehalten werden. Das erste Sieb kann einen Rahmen mit mindestens zwei unterschiedlichen Breiten oder Durchmessern aufweisen, sodass eine größere Breite oder ein größerer Durchmesser auf einer Haltefläche des Flüssigkeitsbehälters aufliegen kann und eine kleinere Breite oder ein kleinerer Durchmesser das erste Sieb im Flüssigkeitsbehälter zentrieren kann. Bevorzugt kann das erste Sieb nur mit einem Randbereich auf der Haltefläche aufliegen. Bevorzugt kann der Flüssigkeitsbehälter einen Hals oder Flaschenhals aufweisen und die definierte Ebene kann in oder an dem Hals oder Flaschenhals definiert sein, beispielsweise indem eine Haltefläche an oder im Hals oder Flaschenhals angeordnet sein kann. Die Haltefläche kann bevorzugt am Rand des Flüssigkeitsbehälter bzw. des Halses angebracht sein und nur wenige Millimeter, bevorzugt maximal 5 mm in Richtung einer Mittelachse des Flüssigkeitsbehälters hineinragen. Besonders bevorzugt kann die Haltefläche umlaufend in einer Ebene innerhalb des Flüssigkeitsbehälters definiert sein und somit eine freibleibende Innenbreite aufweisen, welche größer sein kann als eine minimale Breite eines Siebes welches verschiedene Breiten in verschiedenen Ebenen aufweist.

Der Flüssigkeitsbehälter und/oder der Deckel können bevorzugt ein Gewinde aufweisen und der Deckel kann geeignet sein, am Flüssigkeitsbehälter befestigt zu werden. Bevorzugt kann der Deckel derart am Flüssigkeitsbehälter befestigt werden, dass das erste und das zweite Sieb durch Flüssigkeitsbehälter und Deckel fixiert sind. Bevorzugt kann der Deckel fluiddicht mit dem Flüssigkeitsbehälter abschließen, besonders bevorzugt, ohne dass das erste Sieb und/oder das zweite Sieb zur Dichtfunktion beiträgt. Am Flüssigkeitsbehälter oder am Deckel kann eine Öse vorgesehen sein, die dazu geeignet ist, daran eine Halteschlaufe, einen Karabiner oder einen Logo-Anhänger zu befestigen. Bevorzugt kann die Öse an einem zusätzlichen Bauteil vorgesehen sein, welches geeignet ist, zwischen Flüssigkeitsbehälter und Deckel befestigt zu werden. Bevorzugt kann dieses Bauteil aus einem Dichtungsmaterial, besonders bevorzugt aus einem Gummi gefertigt sein und weiter bevorzugt kann dieses Bauteil zur Abdichtung des Trinkgefäßes beitragen.

Der Deckel kann bevorzugt eine Öffnung aufweisen, welche besonders bevorzugt außermittig angeordnet und verschließbar ist. Der Deckel kann zusätzlich eine Verschlusskappe aufweisen, welche derart geformt und, bevorzugt um eine Achse parallel zur Deckelgrundfläche drehbar, auf dem Deckel angeordnet sein kann, dass sie in einer geschlossenen Stellung die Öffnung, bevorzugt fluiddicht, verschließt und in einer geöffneten Stellung, bevorzugt auf einer der Öffnung gegenüberliegenden Deckelseite, arretiert werden kann.

Das Trinkgefäß kann bevorzugt zumindest teilweise wiederverwendbar und/oder spülmaschinengeeignet sein. Besonders bevorzugt können die beiden Siebe und/oder der Flüssigkeitsbehälter wiederverwendbar und/oder spülmaschinengeeignet sein.

Die vorliegende Erfindung umfasst außerdem ein Set mit einem ersten Trinkgefäß gemäß der oben ausgeführten Beschreibung und einem ersten Pad mit Zusatzstoffen. Bevorzugt kann die Menge der Zusatzstoffe in dem ersten Pad mit dem Volumen des in das erste Trinkgefäß eingebundenen Flüssigkeitsbehälters korrelieren. Mit anderen Worten ist die Menge (bspw. das Gewicht und/oder das Volumen) der Zusatzstoffe in dem ersten Pad bevorzugt so bemessen, dass sie zusammen mit der in das Volumen des ersten Trinkgefäßes aufzunehmenden Wassermenge ein Getränk mit einer gewünschten Konzentration an Zusatzstoffen ergibt.

Das Set kann bevorzugt zusätzlich mindestens einen zweiten Flüssigkeitsbehälter enthalten, welcher ein anderes Volumen aufweisen kann als der im ersten Trinkgefäß enthaltene Flüssigkeitsbehälter. Dadurch lässt sich das erfindungsgemäße Konzept für den Anwender in unterschiedlichem Kontext nutzen. Weiter bevorzugt können alle Flüssigkeitsbehälter des Sets geeignet sein, mit demselben ersten und demselben zweiten Sieb sowie besonders bevorzugt mit demselben Deckel ein Trinkgefäß zu bilden. Auf diese Weise ist nur ein erfindungsgemäßer Mechanismus erforderlich, um Mischgetränke mit unterschiedlichen Flüssigkeitsbehältern herstellen zu können.

Besonders bevorzugt kann das Set zusätzlich ein zweites Pad mit Zusatzstoffen umfassen, wobei die Menge der Zusatzstoffe in dem zweiten Pad mit dem Volumen des zweiten Flüssigkeitsbehälters korreliert. Auf diese Weise kann der Anwender durch simple Auswahl eines passenden Pads für unterschiedliche Flüssigkeitsbehälter Getränke mit gleichbleibender Zusatzstoffkonzentration mischen. Alternativ ist es auch vorstellbar, unterschiedliche Pads mit unterschiedlichen Mengen an Zusatzstoffen für ein und denselben Flüssigkeitsbehälter bereitzustellen, um je nach Bedarf Getränke mit unterschiedlicher Zusatzstoffkonzentration (bspw. stark / schwach) herstellen zu können.

Im Rahmen der vorliegenden Erfindung kann unter einem Pad mit Zusatzstoffen eine Ein-Portionen-Dosis von Additiven in einer Portionsverpackung verstanden werden. Das Pad oder die Portionsverpackung kann bevorzugt wasserlöslich sein und/oder ein Filtermaterial aufweisen. Die im Pad enthaltenen Additive können bevorzugt eine oder eine Kombination der folgenden Komponenten enthalten: Kräuter, Wurzeln, Vitamine, Aromen, Zucker, Salze, Mineralstoffe, Gewürze, Teeblätter, Fruchtsäure, Farbstoffe, Koffein, Creatin, Taurin, Medikamente, Nährstoffe, Spurenelemente, Nahrungsergänzungsmittel, Aufputschmittel oder Diätzusätze.

Bevorzugt können verschiedene Pads, welche unterschiedliche Zusatzstoffe oder Zusatzstoffgemische, bevorzugt natürliche Zusatzstoffe oder Zusatzstoffgemische, enthalten, für verschiedene Zielgruppen, etwa für Leistungssport-, Fitness-, Gaming-, Vital- oder Diät-Zielgruppen hergestellt werden. Besonders bevorzugt können alle Pads gleiche Außenabmessungen aufweisen und können sich nur in Art und Dosis des Inhalts unterscheiden. Somit ist es möglich, mit dem erfindungsgemäßen Trinkgefäß oder dem erfindungsgemäßen Trinkgefäß-Set, natürliches und gesundes Wasser für den Anwender dahingehend zu individualisieren, dass ein individuelles Getränk entsteht, welches hinsichtlich Geschmack, Wirkung und/oder Inhaltsstoffen auf die Vorlieben des Anwenders hin spezifiziert ist. Bevorzugt können Portionsverpackungen hergestellt werden, welche die gleichen Abmessungen wie die Pads aufweisen, aber vom Anwender selbständig befüllt werden können.

Die vorliegende Erfindung betrifft außerdem ein Verfahren zum Zubereiten eines Getränks mit einem Trinkgefäß nach obenstehender Beschreibung mit den folgenden Schritten:
a. Einfüllen von, bevorzugt kaltem, Wasser in den Flüssigkeitsbehälter
b. Einbringen eines Pads mit Zusatzstoffen und/oder mindestens eines Stücks Obst oder Gemüse in den Hohlraum
c. Schütteln des Trinkgefäßes.

Unter kaltem Wasser kann im Zusammenhang der vorliegenden Erfindung Wasser unterhalb der Körpertemperatur oder bei Raumtemperatur, bevorzugt in einem Temperaturbereich von 16° C bis 36° C und/oder Wasser bei Kühlschranktemperatur, bevorzugt in einem Temperaturbereich von 0° C bis 16° C, besonders bevorzugt in einem Temperaturbereich von 2°C bis 8° C verstanden werden. In anderen Worten kann kaltes Wasser eine Temperatur von mindestens 0° C, bevorzugt mindestens 2° C, besonders bevorzugt mindestens 4° C aufweisen und/oder maximal eine Temperatur von 36° C, bevorzugt maximal 26°C aufweisen. Alternativ umfasst das Verfahren nicht nur die Anwendung mit kaltem Wasser, sondern ebenso die Anwendung mit warmem oder siedendem Wasser, also Wasser mit einer Wassertemperatur über 36° C, bevorzugt über 60° C, besonders bevorzugt über 85° C. Alle Temperaturangaben beziehen sich auf Messwerte bei Atmosphärendruck. Bevorzugt umfasst das Verfahren die Verwendung mit Trinkwasser, besonders bevorzugt mit Mineralwasser oder Leitungswasser. Dabei kann das Einfüllen von Wasser in Schritt a. beinhalten:
Einfüllen von Wasser aus einem Hahn, Einfüllen von Wasser aus einer Wasserflasche, einfüllen von Wasser, insbesondere Mineralwasser aus einem Kanister oder aus einem Wasserspender.

Bevorzugt kann das Einbringen eines Pads in Schritt b. beinhalten:
Einlegen des ersten Siebs in den Flüssigkeitsbehälter, anschließendes Auflegen des Pads und/oder des mindestens einen Stücks Obst oder Gemüse auf das erste Sieb, Schließen des Hohlraums mit dem zweiten Sieb, oder:
Auflegen des Pads auf das erste Sieb, anschließend Schließen des Hohlraums mit dem zweiten Sieb, danach Einlegen der beiden Siebe mit dem Pad und/oder dem mindestens einen Stück Obst oder Gemüse in den Flüssigkeitsbehälter.

Das geschilderte Verfahren kann zusätzlich einen der folgenden Schritte aufweisen:
d. Schließen des Trinkgefäßes;
e. Entnehmen des Pads aus dem Trinkgefäß.

Das Verfahren betrifft bevorzugt Getränke, welche zu mindestens 95%, bevorzugt mindestens zu 98% aus Wasser bestehen und das Pad kann bevorzugt wasserlöslich sein und/oder ein Filtermaterial aufweisen. Die im Pad enthaltenen Additive können bevorzugt eine oder eine Kombination der folgenden Komponenten enthalten: Kräuter, Wurzeln, Vitamine, Aromen, Zucker, Salze, Mineralstoffe, Gewürze, Fruchtsäure, Farbstoffe, Koffein, Creatin, Taurin, Medikamente, Nährstoffe, Spurenelemente, Nahrungsergänzungsmittel, Aufputschmittel oder Diätzusätze. Bevorzugt kann ein Pad aus dem erfindungsgemäßen Set verwendet werden.

Die Verwendung eines Pads ermöglicht eine neue Vielfalt an Zusatzstoffen zusammen mit Wasser zu vermengen, die bei einer industriellen Produktion von Wasser mit Geschmack oder anderen Inhaltsstoffen nicht verwendet werden. Es ist daher möglich, Getränke herzustellen, die industriel gar nicht herstellbar wären. Dieser Vorteil ergibt sich insbesondere dadurch, dass die im Pad enthaltenen Zusatzstoffe nicht maschinentauglich sein müssen, wie es bei der industriellen Getränkeherstellung gefordert ist, bei der insbesondere der Einsatz von Schwebstoffen problematisch ist. Ferner kann auf den Einsatz von Stabilisatoren und Konservierungsstoffe verzichtet werden und die Zusatzstoffe im Pad müssen auch nicht in wasserlöslicher Pulverform vorliegen, wie beispielsweise bei Shakern üblich.

Die Individualisierung von Wasser mittels eines Pads gemäß dem erfindungsgemäßen Verfahren ermöglicht dem Anwender daher frisches, qualitativ hochwertiges Wasser, bevorzugt Mineralwasser, direkt vor dem Konsum zu individualisieren. Dadurch kann das Wasser besser auf Bedürfnisse oder Vorlieben des Anwenders angepasst werden. Typische Bedürfnisse oder Vorlieben können beispielsweise spezielle Geschmäcker oder spezielle Wirkungen, insbesondere eine leistungssteigernde oder schmerzlindernde Wirkung sein.

Diese Vorteile können vom Anwender in einfachster Weise erzielt werden, da jedes Pad bereits Zusatzstoffe in der richtigen Dosis enthält und dadurch eine genau bestimmte Dosis an Zusatzstoffen ohne aufwendiges Abmessen zusammen mit dem Wasser eingenommen werden kann.

Die Individualisierbarkeit von Wasser stellt zudem ein nachhaltiges Konzept dar, da der Anwender nur noch Pads und Wasser beziehen muss und nicht literweise Getränkeflaschen kaufen muss, welche zuerst abgefüllt, dann transportiert und schließlich als Leergut verarbeitet werden müssen.

Zusätzlich oder alternativ betrifft die Erfindung ein Verfahren zur Zubereitung eines Kaltgetränks in einem Trinkgefäß mit den folgenden Schritten:
a. Befüllen eines Trinkgefäßes mit einer definierten Menge kalten Wassers;
b. Bereitstellen eines Pads mit Zusatzstoffen, wobei die Menge der Zusatzstoffe in dem Pad mit der definierten Menge kalten Wassers korreliert;
c. Einbringen des Pads in das Trinkgefäß derart, dass die Zusatzstoffe aus dem Pad zumindest teilweise, bevorzugt vollständig, im Wasser aufgelöst und/oder dispergiert und/oder suspendiert werden.

Das Verfahren kann zusätzlich einen der folgenden Schritte aufweisen:
d. Trinkgefäß schütteln
e. Pad entnehmen.

Das Pad kann bevorzugt wasserlöslich sein und/oder ein Filtermaterial aufweisen. Die im Pad enthaltenen Additive können bevorzugt eine oder eine Kombination der folgenden Komponenten enthalten: Kräuter, Wurzeln, Vitamine, Aromen, Zucker, Salze, Mineralstoffe, Gewürze, Fruchtsäure, Farbstoffe, Koffein, Creatin, Taurin, Medikamente, Nährstoffe, Spurenelemente, Nahrungsergänzungsmittel, Aufputschmittel oder Diätzusätze. Bevorzugt kann ein Pad aus dem erfindungsgemäßen Set verwendet werden. Alternativ kann ein wasserlösliches Pulver als Zusatzstoff eingesetzt werden.

Die vorliegende Erfindung umfasst ferner die folgenden Aspekte:
1. Trinkgefäß mit einem Flüssigkeitsbehälter, einem Deckel, einem ersten Sieb und einem zweiten Sieb, wobei das erste Sieb und das zweite Sieb gemeinsam einen Hohlraum definieren, welcher dazu geeignet ist, ein Pad mit Zusatzstoffen aufzunehmen, wobei der Hohlraum eine minimale Breite aufweist, die mindestens 3 mal, bevorzugt mindestens 5 mal, besonders bevorzugt mindestens 8 mal so groß ist wie eine maximale Höhe des Hohlraums.
2. Trinkgefäß nach Aspekt 1, wobei der Flüssigkeitsbehälter ein Volumen von mindestens 0,3 Litern, bevorzugt mindestens 0,5 Litern, besonders bevorzugt mindestens 0,75 Litern aufweist und/oder ein Volumen von maximal 3 Litern, bevorzugt maximal 2,5 Litern aufweist.
3. Trinkgefäß nach einem der Aspekte 1 oder 2, wobei das erste Sieb und/oder das zweite Sieb einen Siebboden mit einer Fläche von mindestens 900 mm², bevorzugt mindestens 1.200 mm² und besonders bevorzugt mindestens 1.500 mm² aufweisen.
4. Trinkgefäß nach einem der Aspekte 1 bis 3, wobei das erste Sieb und/oder das zweite Sieb jeweils mindestens 8, bevorzugt mindestens 18, besonders bevorzugt mindestens 30 Perforierungen aufweist und wobei die Perforierungen zusammen eine Gesamtfläche von mindestens 400 mm², bevorzugt mindestens 600 mm², besonders bevorzugt mindestens 800 mm² aufweisen.
5. Trinkgefäß nach einem der Aspekte 1 bis 4, wobei das erste und/oder das zweite Sieb einen kreisförmigen Siebboden mit mehreren Perforierungen aufweisen und die Größe und/oder die Anzahl der Perforierungen in radialer Richtung vom Mittelpunkt aus in Richtung Randbereich zunimmt.
6. Trinkgefäß nach einem der Aspekte 1 bis 5, wobei jede Perforierung eine Querschnittsfläche zwischen 5 mm² und 50 mm², bevorzugt zwischen 10 mm² und 40 mm² aufweist und/oder wobei Perforierungen in mindestens zwei, bevorzugt mindestens drei und maximal fünf Größen vorgesehen sind.
7. Trinkgefäß nach einem der Aspekte 1 bis 6, wobei der Hohlraum eine Höhe von maximal 10 mm, bevorzugt maximal 5 mm aufweist.
8. Trinkgefäß nach einem der Aspekte 1 bis 7, wobei die maximale Höhe des Hohlraums maximal 15 mm beträgt und die minimale Breite des Hohlraums mindestens 30 mm beträgt.
9. Trinkgefäß nach einem der Aspekte 1 bis 8, wobei der Hohlraum ein Volumen zwischen 2.000 mm³ und 40.000 mm³, bevorzugt zwischen 3.500 mm³ und 25.000 mm³, besonders bevorzugt zwischen 5.000 mm³ und 10.000 mm³ aufweist.
10. Trinkgefäß nach einem der Aspekte 1 bis 9, wobei das erste Sieb und/oder das zweite Sieb ein Griffelement, bevorzugt einen Griffhaken aufweisen, welcher am Rand des jeweiligen Siebs angeordnet ist und in einer Richtung senkrecht zu einer Grundfläche des jeweiligen Siebs vorsteht.
11. Trinkgefäß nach einem der Aspekte 1 bis 10, wobei das erste Sieb in einer definierten Ebene im Flüssigkeitsbehälter gehalten wird, bevorzugt wobei der Flüssigkeitsbehälter einen Flaschenhals aufweist und die definierte Ebene in oder an dem Flaschenhals angeordnet ist.
12. Trinkgefäß nach einem der Aspekte 1 bis 11, wobei das erste Sieb zumindest teilweise eine Breite aufweist, die breiter ist als die Breite des zweiten Siebs und/oder wobei das zweite Sieb in das erste Sieb eingesetzt werden kann, bevorzugt wobei das erste Sieb und das zweite Sieb lösbar miteinander verbunden sind.
13. Trinkgefäß nach einem der Aspekte 1 bis 12, wobei der Flüssigkeitsbehälter und/oder der Deckel ein Gewinde aufweist, wobei der Deckel geeignet ist, am Flüssigkeitsbehälter befestigt zu werden, bevorzugt derart, dass das erste und das zweite Sieb durch Flüssigkeitsbehälter und Deckel fixiert sind.
14. Trinkgefäß nach Aspekt 13, wobei der Deckel fluiddicht mit dem Flüssigkeitsbehälter abschließt, bevorzugt ohne dass das erste Sieb und/oder das zweite Sieb zur Dichtfunktion beiträgt.
15. Trinkgefäß nach einem der Aspekte 1 bis 14, wobei der Deckel eine Öffnung aufweist, welche bevorzugt außermittig angeordnet und verschließbar ist.
16. Trinkgefäß nach Aspekt 15, wobei der Deckel eine Verschlusskappe aufweist, welche derart geformt und, bevorzugt um eine Achse parallel zur Deckelgrundfläche drehbar, auf dem Deckel angeordnet ist, dass sie in einer geschlossenen Stellung die Öffnung verschließt und in einer geöffneten Stellung, bevorzugt auf einer der Öffnung gegenüberliegenden Deckelseite, arretiert werden kann.
17. Trinkgefäß nach einem der Aspekte 1 bis 16, wobei das erste und/oder das zweite Sieb eines der folgenden Materialien aufweist: Edelstahl, Silikon, Tritan, PP, PC, PE, LDPE, PET, PTFE.
18. Set mit einem ersten Trinkgefäß nach einem der vorstehenden Aspekte und einem ersten Pad mit Zusatzstoffen, bevorzugt wobei die Menge der Zusatzstoffe in dem ersten Pad mit dem Volumen des in das erste Trinkgefäß eingebundenen Flüssigkeitsbehälters korreliert.
19. Set nach Aspekt 18, welches mindestens einen zweiten Flüssigkeitsbehälter enthält, welcher ein anderes Volumen aufweist, als der im ersten Trinkgefäß enthaltene Flüssigkeitsbehälter, wobei bevorzugt alle Flüssigkeitsbehälter des Sets geeignet sind, mit dem selben ersten und dem selben zweiten Sieb sowie bevorzugt mit dem selben Deckel ein Trinkgefäß zu bilden.
20. Set nach Aspekt 18, welches ein zweites Pad mit Zusatzstoffen umfasst, wobei die Menge der Zusatzstoffe in dem zweiten Pad mit dem Volumen des zweiten Flüssigkeitsbehälters korreliert.
21. Set nach einem der Aspekte 18 bis 20, wobei das Pad mit Zusatzstoffen wasserlöslich ist und/oder ein Filtermaterial aufweist und eine oder eine Kombination der folgenden Komponenten enthält: Kräuter, Wurzeln, Vitamine, Aromen, Zucker, Salze, Mineralstoffe, Gewürze, Fruchtsäure, Farbstoffe, Koffein, Creatin, Taurin, Medikamente, Spurenelemente, Nahrungsergänzungsmittel.
22. Verfahren zum Zubereiten eines Getränks mit einem Trinkgefäß nach einem der Aspekte 1 bis 19, mit den folgenden Schritten:
   a. Einfüllen von, bevorzugt kaltem, Wasser in den Flüssigkeitsbehälter;
   b. Einbringen eines Pads mit Zusatzstoffen und/oder mindestens eines Stücks Obst oder Gemüse in den Hohlraum;
   c. Schütteln des Trinkgefäßes.
23. Verfahren nach Aspekt 22, wobei Schritt b beinhaltet:
   Einlegen des ersten Siebs in den Flüssigkeitsbehälter, anschließendes Auflegen des Pads und/oder des mindestens einen Stücks Obst oder Gemüse auf das erste Sieb, Schließen des Hohlraums mit dem zweiten Sieb; oder
   Auflegen des Pads auf das erste Sieb, anschließend Schließen des Hohlraums mit dem zweiten Sieb, danach Einlegen der beiden Siebe mit dem Pad und/oder dem mindestens einen Stück Obst oder Gemüse in den Flüssigkeitsbehälter.
24. Verfahren nach einem der Aspekte 22 oder 23, welches zusätzlich einen der folgenden Schritte aufweist:
   d. Schließen des Trinkgefäßes;
   e. Entnehmen des Pads aus dem Trinkgefäß.
25. Verfahren nach einem der Aspekte 22 bis 24, wobei das Getränk mindestens zu 95%, bevorzugt mindestens zu 98% aus Wasser besteht.
26. Verfahren nach einem der Aspekte 22 bis 25, wobei das Pad mit Zusatzstoffen wasserlöslich ist und/oder ein Filtermaterial aufweist und eine oder eine Kombination der folgenden Komponenten enthält: Kräuter, Wurzeln, Vitamine, Aromen, Zucker, Salze, Mineralstoffe, Gewürze, Fruchtsäure, Farbstoffe, Koffein, Creatin, Taurin, Medikamente, Spurenelemente, Nahrungsergänzungsmittel.
27. Verfahren zur Zubereitung eines Kaltgetränks in einem Trinkgefäß mit den folgenden Schritten:
   a. Befüllen eines Trinkgefäßes mit einer definierten Menge kalten Wassers;
   b. Bereitstellen eines Pads mit Zusatzstoffen, wobei die Menge der Zusatzstoffe in dem Pad mit der definierten Menge kalten Wassers korreliert;
   c. Einbringen des Pads in das Trinkgefäß derart, dass die Zusatzstoffe aus dem Pad zumindest teilweise, bevorzugt vollständig, im Wasser aufgelöst und/oder dispergiert und/oder suspendiert werden.
28. Verfahren nach Aspekt 27, wobei das Pad wasserlöslich ist und/oder ein Filtermaterial aufweist und eine oder eine Kombination der folgenden Komponenten enthält: Kräuter, Wurzeln, Gewürze, Nährstoffe, Spurenelemente, Vitamine, Aromen, Zucker, Salze, Mineralstoffe, Fruchtsäure, Farbstoffe, Aufputschmittel, Koffein, Creatin, Taurin, Diätzusätze, Medikamente, Nahrungsergänzungsmittel.
29. Verfahren nach einem der Aspekte 27 bis 28, welches zusätzlich einen der folgenden Schritte aufweist:
   d. Trinkgefäß schütteln
   e. Pad entnehmen.
30. Verfahren nach einem der Aspekte 27 bis 29, wobei ein wasserlösliches Pulver als Zusatzstoff eingesetzt wird.

Im Folgenden ist mit Bezug auf die folgenden Abbildungen beispielhaft eine bevorzugte Ausführungsform der Erfindung beschrieben. Die Abbildungen zeigen:
- Abbildung 1: ein Trinkgefäß gemäß einer bevorzugten Ausführungsform der vorliegenden Erfindung in Explosionsdarstellung;
- Abbildung 2A: ein erstes Sieb gemäß einer bevorzugten Ausführungsform der vorliegenden Erfindung in 3D-Darstellung;
- Abbildung 2B: das erste Sieb aus Abbildung 2A in einer Draufsicht;
- Abbildung 2C: das erste Sieb aus Abbildung 2A in einer Seitenansicht;
- Abbildung 3A: ein zweites Sieb gemäß einer bevorzugten Ausführungsform der vorliegenden Erfindung in 3D-Darstellung;
- Abbildung 3B: das zweite Sieb aus Abbildung 3A in einer Draufsicht;
- Abbildung 3C: das zweite Sieb aus Abbildung 3A in einer Seitenansicht;
- Abbildung 4A: eine 3D-Darstellung eines Deckels gemäß einer bevorzugten Ausführungsform der vorliegenden Erfindung;
- Abbildung 4B: eine 3D-Darstellung einer Verschlusskappe für den Deckel aus Abbildung 3A;
- Abbildung 5: das Trinkgefäß gemäß Abbildung 1;
- Abbildung 6: ein Set mit zwei Flüssigkeitsbehältern gemäß einer bevorzugten Ausführungsform der vorliegenden Erfindung; und
- Abbildung 7: schematische Darstellungen (Seitenansicht und Draufsicht) eines Pads zur Verwendung in einem Trinkgefäß gemäß einer bevorzugten Ausführungsform der vorliegenden Erfindung.

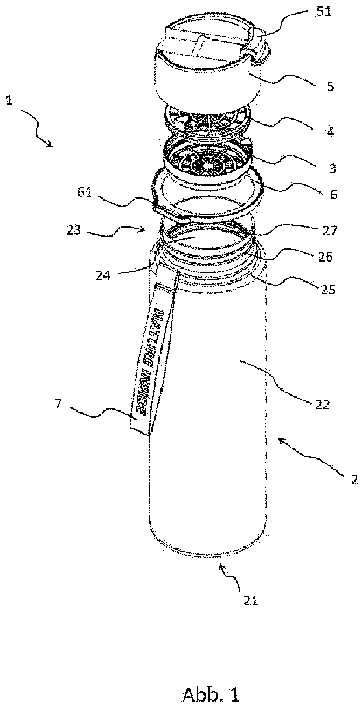

Abbildung 1 zeigt die einzelnen Komponenten einer bevorzugten Ausführungsform eines Trinkgefäßes 1, wobei die einzelnen Komponenten des Trinkgefäßes in einer bevorzugten Einbaurichtung explodiert sind. Daher lässt sich bereits aus der Explosionsdarstellung eine bevorzugte Einbaureihenfolge ableiten. Eine Flasche 2 bildet einen Flüssigkeitsbehälter. In die Flasche 2 können ein erstes Sieb 3 und ein zweites Sieb 4 eingesetzt werden und die Flasche 2 kann mit einem Deckel 5 verschlossen werden. Am Deckel 5 kann zusätzlich eine Verschlusskappe 51 befestigt sein. Ein Kunststoffring 6 kann über die Flasche 2 gestülpt sein und ein Anhänger 7 kann an dem Kunststoffring 6 befestigt sein.

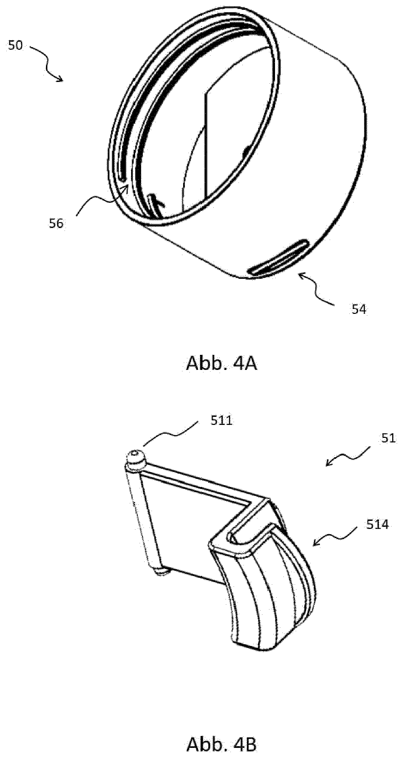

Die in Abbildung 1 dargestellte Flasche 2 ist zylinderförmig mit kreisförmiger Grundfläche und weist einen kreisförmigen Flaschenboden 21, einen Flaschenbauch 22 und eine Öffnung 24 auf. Der Durchmesser der Grundfläche bzw. der Durchmesser des Zylindermantels definiert die Breite des Flaschenbauchs 22 und damit die Breite der Flasche 2. Die Ausdehnung der Flasche 2 von Flaschenboden 21 zu Öffnung 24 definiert die Höhe der Flasche 2. Die Flasche 2 weist an dem Ende mit der Öffnung 24, ihrem oberen Ende, einen Flaschenhals 23 auf, welcher einen kleineren Durchmesser aufweist als der Flaschenbauch 22. Bevorzugt entspricht der Innendurchmesser des Flaschenhalses 23 dem Durchmesser der Öffnung 24. Der Durchmesserübergang von Flaschenbauch 22 zu Flaschenhals 23 kann fließend oder in etwa in einer Ebene erfolgen, sodass eine äußere Haltefläche 25 entsteht, welche parallel zur Grundfläche ausgerichtet sein oder einen Winkel zur Grundfläche aufweisen kann, welcher bevorzugt kleiner 60° ist. Der Flaschenhals 23 kann ein Gewinde 26 aufweisen, um die Flasche 2 mit dem Deckel 5 mittels eines Schraubverschlusses zu verschließen. Alternativ könnte der Deckel 5 auch auf den Flaschenhals 23 aufgesteckt werden oder anderweitig befestigt sein. Mit Bezugnahme auf Abbildungen 4A und 4B wird der Deckel 5 unten genauer beschrieben.

Im gezeigten Beispiel weist der Flaschenbauch 22 ein Volumen von etwa 0,5 L auf. Die Flasche 2 weist bevorzugt eine Breite von 60 mm bis 70 mm auf und eine Höhe von bevorzugt 180 mm bis 210 mm, wobei sich der Flaschenhals über etwa 10% bis 15% der Flaschenhöhe erstreckt. Der Flaschenhals weist hier also bevorzugt eine Höhe von 18 mm bis 33 mm auf. Bevorzugt weist der Flaschenhals ferner einen Durchmesser von 40 mm bis 60 mm, besonders bevorzugt einen Durchmesser von 45 mm bis 55 mm auf. Die Flasche 2 kann bevorzugt in weiteren Größen hergestellt werden, insbesondere mit Fassungsvolumina von 0,75 L; 1,0 L; 1,5; 2,0 L; und 2,5 L. Auch größere und kleinere sowie dazwischenliegende Flaschenvolumina sind möglich. Höhe und Breite der Flasche können in Abhängigkeit des Flaschenvolumens variieren. Bevorzugt weisen die Flaschen jedoch zylinderförmige Flaschenhälse auf, welche unabhängig von den Flaschenvolumina zumindest in ihren oberen Bereichen identische Abmaße aufweisen, bevorzugt die oben beschriebenen Abmaße.

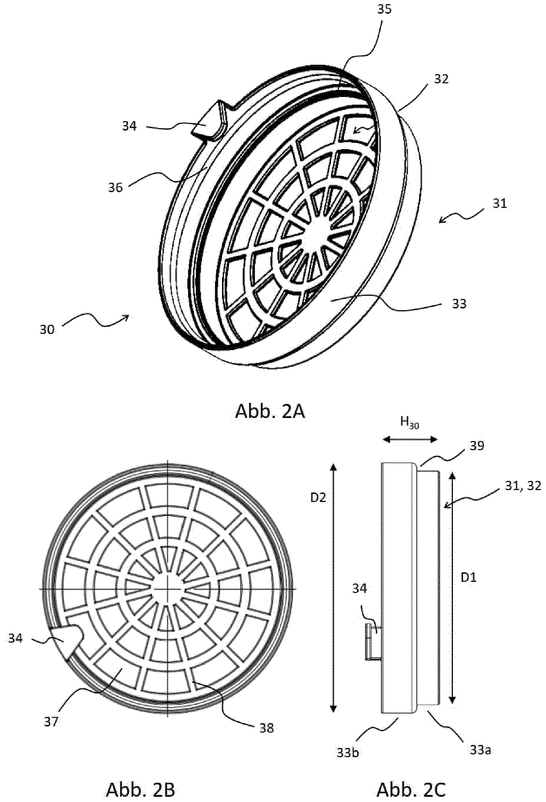

Der Flaschenhals 23 kann eine innere Haltefläche 27 aufweisen, die das erste Sieb 3 in einer definierten Ebene halten kann. Im vorliegenden Beispiel ist die innere Haltefläche 27 ringförmig im Flaschenhals 23 ausgebildet und parallel zur Grundfläche orientiert. Bevorzugt weist die ringförmige Haltefläche 27 einen Innendurchmesser, also einen Durchbruch auf, der nur unwesentlich kleiner ist als die Öffnung 24. So kann gewährleistet werden, dass ein erstes Sieb mit möglichst großer Grundfläche und damit einem möglichst großen Siebboden in die Flasche 2 eingesetzt werden kann. Die Verwendung eines großflächigen Siebbodens ist vorteilhaft, um das in der Flasche enthalte Wasser durch Schütteln und innerhalb kurzer Zeit, bevorzugt innerhalb von wenigen Sekunden, mit Zusatzstoffen anreichern zu können. Eine bevorzugte Ausführungsform des ersten Siebs wird zusammen mit einer bevorzugten Ausführungsform des zweiten Siebs mit Bezugnahme auf die Abbildungen 2A bis 3B unten genauer erläutert. Die innere Haltefläche 27 ist bevorzugt 5 mm bis 30 mm, besonders bevorzugt 10 mm bis 20 mm unterhalb der Öffnung 24 angebracht. Die innere Haltefläche kann auf gleicher Höhe wie die äußere Haltefläche vorgesehen sein oder darüber oder darunter liegen. Liegt die innere Haltefläche in einer Ebene über der äußeren Haltefläche 25, ist sie im Flaschenhals 23 oder am oberen Rand des Flaschenhalses 23 definiert, was zum Zwecke der einfachen Handhabbarkeit bevorzugt ist. Die innere Haltefläche 27 kann identisch sein mit der Stirnseite des Flaschenhalses 23. Die innere Haltefläche 27 kann aber auch in einer Ebene unterhalb der äußeren Haltefläche 25 definiert sein, also im Flaschenbauch 22 und nicht im Flaschenhals 23. Die innere Haltefläche 27 verläuft bevorzugt entlang des gesamten Umfangs, ist also bevorzugt ringförmig, was eine einfache Herstellbarkeit und gute Zugänglichkeit sowie Robustheit bei Verwendung der Flasche 2 gewährleistet. Die innere Haltefläche 27 kann aber auch mehrere einzelne Halteteilflächen oder Vorsprünge oder Stege aufweisen, welche bevorzugt in einer Ebene liegen, etwa zwei, drei oder mehr Ringsegmente.

Der Kunststoffring 6 weist eine Öse 61 zur Befestigung eines Anhängers 7 auf. Der Anhänger 7 ist vorzugsweise eine Schlaufe, welche das Logo des Trinkgefäßherstellers aufweist. Alternativ kann der Anhänger 7 auch ein Karabiner, ein Band, eine Kette, ein Riemen oder Ähnliches sein. Der Kunststoffring 6 weist vorzugsweise einen Innendurchmesser auf, welcher dem Außendurchmesser des Flaschenhalses entspricht und einen Außendurchmesser kleiner oder gleich der Flaschenbreite. Somit kann der Kunststoffring 6 über den Flaschenhals 23 gestülpt werden und auf der äußeren Haltefläche 25 aufliegen. Damit kann der Kunststoffring 6 zusätzlich zur Abdichtung des Trinkgefäßes beitragen. Der Kunststoffring 6 kann jedoch auch einen geeigneten Innendurchmesser aufweisen, um über den Flaschenbauch 22 gestülpt zu werden oder der Kunststoffring 6 kann weggelassen werden, bevorzugt, ohne die Funktionalität, insbesondere die Dichtheit, des beanspruchten Trinkgefäßes zu beeinträchtigen.

Abbildung 2A zeigt eine dreidimensionale Darstellung einer bevorzugten Ausführungsform eines ersten Siebs 30. Parallel zu einer Grundfläche 31 des ersten Siebs 30 erstreckt sich der Siebboden 32, welcher vom Siebrahmen 33 begrenzt wird. Am Siebrahmen 33 ist bevorzugt ein Griffelement in Form eines Griffhakens 34 angebracht. Das Sieb weist eine Siebhöhe H₃₀ (vgl. Abb. 2C) auf, welche senkrecht zur Grundfläche bestimmt wird und der Höhe des Siebrahmens entspricht, wobei der Griffhaken 34 unberücksichtigt bleibt. Das Sieb weist eine Breite auf, welche die größte Ausdehnung des Siebs in einer Ebene parallel zur Grundfläche bezeichnet. Bei einem runden, kreis-, ring-, zylinder- oder kegelförmigem Sieb ist die Breite entsprechend durch den größten Durchmesser definiert, bezugnehmend auf Abbildung 2C ist dies ein Durchmesser D2.

Die Grundfläche 31 weist bevorzugt die gleiche Grundform auf, wie die Grundfläche der Flasche 2 oder wie ein Querschnitt der Mantelfläche des Flaschenbauchs 22 oder des Flaschenhalses 23. Bevorzugt ist die Grundfläche 31 des Siebs 30 kreisförmig.

Der Siebboden 32 ist bevorzugt in einer Ebene parallel zur Grundfläche 31 angeordnet, besonders bevorzugt in der Ebene der Grundfläche 31 oder in einer darüber liegenden Ebene. Bevorzugt weist der Siebboden die gleiche Grundform wie die Grundfläche auf, besonders bevorzugt ist der Siebboden rund, rundlich oder kreisförmig. Der Siebboden 32 ist bevorzugt in etwa eben, besonders bevorzugt eben. Alternativ kann der Siebboden 32 auch leicht gewölbt sein, wobei der Siebboden bevorzugt einen Wölbungsradius aufweist, der mindestens einen Faktor fünf, bevorzugt mindestens einen Faktor zehn in Bezug auf die Höhe des Siebs 30 aufweist.

In der vorliegenden Ausführungsform weist der Siebboden 32 mehrere Perforationen 37 und Stege 38 auf (siehe auch Abbildung 2B). Bevorzugt ist die gemeinsame Fläche aller Perforationen des Siebbodens annähernd gleich groß, besonders bevorzugt größer als die gemeinsame Fläche aller Stege des Siebbodens. Mit anderen Worten sind bevorzugt mindestens 45%, besonders bevorzugt mindestens 50% oder mehr als 50% des Siebbodens durchbrochen oder perforiert. Eine solche großflächige Perforierung ist vorteilhaft, um beim Schütteln des Trinkgefäßes schnell viel Wasser durch das Sieb zu befördern. Weiterhin ist bevorzugt, dass maximal 80%, bevorzugt maximal 70% und besonders bevorzugt maximal 60% des Siebbodens durchbrochen oder perforiert sind, da somit genug Material am Siebboden verbleibt, um Stege zu formen, die dem Sieb Stabilität verleihen und/oder ein Pad oder ein Stück Obst oder Gemüse oder auch Beeren im Sieb halten und verhindern, dass diese durch den Siebboden in den Flüssigkeitsbehälter, hier also in die Flasche 2, fallen. In der vorliegenden Ausführungsform sind die Perforationen symmetrisch über den Siebboden verteilt. Die Stegbreite ist annähernd konstant, während die Perforationen unterschiedliche Größen aufweisen, abhängig von ihrer Position auf dem Siebbodenradius. Die Perforationen können jedoch auch zufällig über den Siebboden verteilt sein, alle gleich groß oder jeweils unterschiedlich groß sein.

Der Rahmen 33 (Abbildung 2A) des ersten Siebs 30 ist bevorzugt zumindest teilweise zylinderförmig und bevorzugt abgestuft bzw. als Stufenzylinder ausgeführt, sodass der Rahmen entlang seiner Höhe verschiede Breiten und/oder Durchmesser aufweist. Das Sieb 30 weist bevorzugt eine erste Breite bzw. einen ersten Durchmesser D1 und eine zweite Breite bzw. einen zweiten Durchmesser D2 auf.

Bezugnehmend auf Abbildung 2C ist der zweite Durchmesser D2 bevorzugt größer als der erste Durchmesser D1. Weiter bevorzugt ist der Rahmen- oder Zylinderabschnitt 33b mit dem zweiten Durchmesser D2 in Einbaurichtung (vgl. Abbildung 1) über dem Rahmen- oder Zylinderabschnitt 33a mit dem ersten Durchmesser D1 angeordnet. Besonders bevorzugt ist der Siebboden 32 im unteren Rahmen- oder Zylinderabschnitt 33a, bevorzugt in dem Rahmen- oder Zylinderabschnitt mit dem Durchmesser D1 angeordnet. Die als Stufenzylinder ausgeführte Mantelfläche des ersten Siebs weist mindestens eine Übergangszone zwischen zwei Rahmen- oder Zylinderabschnitten mit unterschiedlichen Durchmessern auf. In der Übergangszone kann eine fließende oder eine sprunghafte Änderung des Zylinderdurchmessers erfolgen und in der Übergangszone ist bevorzugt eine äußere Auflagefläche 39 definiert. Besonders bevorzugt ist die äußere Auflagefläche 39 annähernd parallel zur Sieb-Grundfläche 31 und/oder zum Siebboden 32. Die Auflagefläche 39 befindet sich bevorzugt in mittlerer Höhe des ersten Siebs 30, besonders bevorzugt auf einer Höhe von mindestens 35% und maximal 55% der Siebhöhe H₃₀. Bevorzugt ist die Auflagefläche 39 geeignet, auf der inneren Haltefläche 27 aufzuliegen. Weiter bevorzugt entspricht Durchmesser D1 in etwa dem Innendurchmesser der inneren Haltefläche 27 der Flasche, bevorzugt abzüglich einer Montagetoleranz, welche bevorzugt 1 mm bis 3 mm beträgt. Mit anderen Worten ist der Durchmesser D1 bevorzugt 1 mm bis 3 mm kleiner als der Innendurchmesser der inneren Haltefläche 27. Durchmesser D2 entspricht weiter bevorzugt dem Innendurchmesser des Flaschenhalses 23 der Flasche 2, bevorzugt abzüglich einer Montagetoleranz, welche bevorzugt 1 mm bis 3 mm beträgt. Mit anderen Worten ist der Durchmesser D2 bevorzugt 1 mm bis 3 mm kleiner als der Innendurchmesser des Flaschenhalses 23. Diese Formgestaltung des ersten Siebs ermöglicht eine platzsparende und genaue Positionierung des Siebs 30 im Flaschenhals 23. Insbesondere werden die Außenabmessungen der Flasche mit montiertem Deckel nicht oder nur geringfügig von dem Sieb beeinflusst. Zusätzlich bleibt das Sieb durch die Fixierung im Flaschenhals bei geöffnetem Flaschendeckel gut zugänglich und sitzt spielfrei im Flaschenhals, bzw. weist nur geringes Spiel im Flaschenhals auf, sodass das Sieb beim Schütteln der Flasche nicht oder nur minimal verrutscht und ein Klappern des Siebs 30 in der Flasche 2 vermieden werden kann.

Zurückkommend auf Abbildung 2A ist an der Innenfläche des Siebrahmens 33 eine innere Auflagefläche 35 definiert, welche der Gegenseite zur äußeren Auflagefläche 39 entspricht und der Positionierung des zweiten Siebs 4 dient. Bevorzugt kann eine Rille 36 auf der Innenseite des Siebrahmens 33, bevorzugt auf der Innenseite des oberen Rahmenabschnitts 33b vorgesehen sein, welche eine Aufnahme für ein entsprechendes Gegenstück (z.B. eine Wulst) des zweiten Siebs 4 bildet.

Der Griffhaken 34 ragt bevorzugt in Verlängerung des oberen Zylinderabschnitts 33b aus einem Teil des Siebrahmens hervor und weist eine in etwa um 90° abgeknickte Grifffläche auf, welche bevorzugt parallel zur Grundfläche 31 oder zum Siebboden 32 verläuft. Bevorzugt entspricht der Abstand von Grifffläche zu Siebboden mindestens der Höhe des oberen Zylinderabschnitts 33b, besonders bevorzugt mindestens 7 mm. Der Griffhaken 3 erleichtert die Entnahme des ersten Siebs 30 aus dem Flaschenhals 23. Ein Anwender kann z.B. mit einem Finger unter die Grifffläche greifen oder den Griffhaken seitlich mit zwei Fingern fassen und das Sieb somit aus dem Flaschenhals entnehmen, ohne die Flasche 2 kippen oder umdrehen zu müssen.

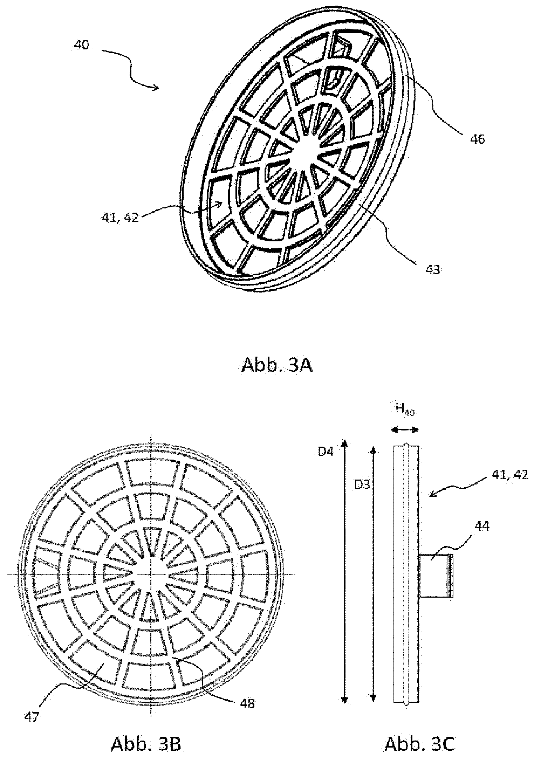

Abbildung 3A zeigt eine 3D-Darstellung des zweiten Siebs 40. Das zweite Sieb 40 kann eine Grundfläche 41 und einen Siebboden 42 aufweisen, einen Siebrahmen 43, eine Wulst 46 und ein Griffelement in Form eines Griffhakens 44. Die Grundfläche 41 und der Siebboden 42 können bezüglich ihrer Form bevorzugt die gleichen Eigenschaften aufweisen, wie die Grundfläche 31 und/oder der Siebboden 32 des ersten Siebs. Das zweite Sieb bildet im montierten Zustand gemeinsam mit dem ersten Sieb einen Hohlraum im Trinkgefäß, welcher bevorzugt geeignet ist, ein Pad, ein Nahrungsergänzungsmittel oder ein Lebensmittel wie z.B. ein Fruchtstück aufzunehmen. Es ist daher bevorzugt, den Siebboden 42 des zweiten Siebs 40 ähnlich, bevorzugt unter Berücksichtigung einer Größenskalierung identisch auszugestalten wie den Siebboden 32 des ersten Siebs 30. Somit können die Vorteile der Ausgestaltung des ersten Siebs 30, insbesondere die Ausgestaltung der Perforierungen 37 und Stege 38 im Siebboden 32, auch auf das zweite Sieb 40, insbesondere auf die Ausgestaltung der Perforierungen 47 und Stege 48 im Siebboden 42, und dadurch ebenfalls auf das Gesamtsystem übertragen werden. Bevorzugt können das zweite Sieb 40 und das erste Sieb 30 ineinander eingesetzt werden, um so den Hohlraum zu bilden. In anderen Ausführungsformen könnten das erstes Sieb 3 und das zweite Sieb 4 den Hohlraum auch bilden, indem sie übereinander in das Trinkgefäß 1 eingesetzt werden oder indem beide Siebe mit Hilfe eines oder mehrerer Clips oder Gelenke miteinander verbunden sind.

Der bevorzugt zylinderförmige Siebrahmen 43 umschließt den Siebboden 42 und definiert eine zweite Siebhöhe H₄₀ sowie einen dritten Siebdurchmesser D3. Bevorzugt gilt D1 < D3 < D2, sodass das zweite Sieb 40 derart in das erste Sieb 30 eingesetzt werden kann, dass der Siebrahmen 43 mit seiner Stirnfläche auf der inneren Auflagefläche 35 des ersten Siebs 30 aufliegen kann. Bevorzugt ist die Siebhöhe H₄₀ kleiner als die Höhe des Zylinderabschnitts 33b des ersten Siebs. Dadurch kann - sofern die Griffelemente ignoriert werden - das zweite Sieb 40 vollständig in das erste Sieb 30 eingesetzt werden. Die Außenabmessungen des ersten Siebs 30 definieren daher auch die Außenabmessungen beider Siebe zusammen.

Der Siebboden 42 kann mittig im Siebrahmen 43 angeordnet sein, also auf halber Siebhöhe, oder außermittig oder an einer Stirnseite des Siebrahmens 43 angeordnet sein. Mit der Anordnung des Siebbodens 42 im Siebrahmen 43 kann die Höhe und damit das Volumen des Hohlraums beeinflusst werden, welchen das erste und das zweite Sieb gemeinsam bilden.

Die Wulst 46 kann bevorzugt auf halber Siebhöhe und auf einer Ebene um den Siebrahmen 43 verlaufen. Die Wulst 46 weist einen vierten Durchmesser D4 auf, welcher größer ist als der dritte Durchmesser D3 des zweiten Siebs und gleichzeitig nicht größer, bevorzugt kleiner als der erste Durchmesser D1 des ersten Siebs ist. Die Wulst 46 ist derart gestaltet, dass sie mit der Rille 36 in Kontakt steht, wenn das zweite Sieb in das erste Sieb eingesetzt ist. Somit kann gewährleistet werden, dass das zweite Sieb nicht ungewollt aus dem ersten Sieb herausfällt, sondern nur mit etwas Kraft aus dem ersten Sieb herausgezogen werden kann. Bevorzugt reicht eine an dem Griffhaken 44 anliegende und in Richtung der Siebhöhen wirkende Kraft von 2 N, besonders bevorzugt von 1 N aus, um den aus der Wulst 46 resultierenden Widerstand zu überwinden und das zweite Sieb 40 aus dem ersten Sieb 30 zu entnehmen.

Der Griffhaken 44 ragt in Richtung der Siebhöhe H₄₀ und in Verlängerung des Siebrahmens 42 aus dem Siebrahmen 43 hervor und weist eine in etwa um 90° abgeknickte Grifffläche auf, welcher bevorzugt parallel zur Grundfläche oder zum Siebboden 42 verläuft. Bevorzugt entspricht der Abstand von Grifffläche zu Siebboden 42 mindestens 5 mm, besonders bevorzugt mindestens 7 mm, sodass ein Anwender mit seiner Fingerkuppe die Grifffläche derart berühren kann, dass er das zweite Sieb aus dem ersten Sieb entnehmen kann. Mit anderen Worten ist bevorzugt, dass die Grifffläche derart geformt und am zweiten Sieb angebracht ist, dass ein Anwender eine Kraft von mindestens 1 N, besonders bevorzugt mindestens 2 N parallel zur Siebhöhe und in eine Richtung weg vom Siebboden auf den Griffhaken, bevorzugt mittig auf die Grifffläche, ausüben kann. Der Griffhaken 44 erleichtert dadurch die Entnahme des zweiten Siebs 40 aus dem ersten Sieb 30. Ein Anwender kann z.B. mit einem Finger unter die Grifffläche greifen oder den Griffhaken seitlich mit zwei Fingern fassen und das zweite Sieb somit aus dem ersten Sieb entnehmen. Um den durch die Wulst 46 verursachten Widerstand leichter zu überwinden, kann ein Anwender außerdem am Griffhaken rütteln und durch Ziehen am Griffhaken das zweite Sieb leicht schräg stellen.

Die Griffhaken 34 und 44 sind bevorzugt derart am ersten und zweiten Sieb angebracht, dass, wenn das zweite Sieb 40 im ersten Sieb 30 eingelegt ist, beide Griffflächen in etwa in einer Ebene liegen. Daher ist bevorzugt, dass der Abstand der Grifffläche von Griffelement 44 zur Grundfläche 41 des zweiten Siebs dem Abstand von der Grifffläche von Griffelement 34 zur inneren Auflagefläche 35 des ersten Siebs entspricht, oder die Abstände nur kleine Abweichungen aufweisen, bevorzugt kleiner 5 mm. Dadurch können die beiden Siebe besonders platzsparend in das Trinkgefäß 1 eingesetzt werden.

Bevorzugt sind sowohl das erste Sieb 30 als auch das zweite Sieb 40 jeweils aus nur einem Teil gefertigt. Besonders bevorzugt sind beide Siebe aus Edelstahl gefertigt. Alternativ können die Siebe auch aus mehreren Teilen und/oder aus einem anderen oder einer Kombination mehrerer Materialien gefertigt sein. Insbesondere können die Siebe Material aus einer oder mehrerer der folgenden Materialgruppen aufweisen: Kunststoffe, bevorzugt lebensmittelechte Kunststoffe oder Silikone, Edelstahl, Titan, Aluminium, Keramiken.

Bevorzugt weisen die Siebe eine ausreichende Streckgrenze bzw. Bruchfestigkeit auf, sodass sie bei einer mittig aufgebrachten und in Richtung der Siebhöhe wirkenden Kraft von 30 N nicht plastisch verformen oder bersten. Besonders bevorzugt weisen die Siebe eine Steifigkeit auf, sodass sich die Siebböden 32, 42 bei einer mittig aufgebrachten und in Richtung der Siebhöhe wirkenden Kraft von 30 N um maximal 2 mm, besonders bevorzugt um maximal 1 mm in Richtung der Krafteinwirkung ausschließlich elastisch verformen.

Abbildung 4A zeigt einen Deckel 50 für ein erfindungsgemäßes Trinkgefäß 1, welcher auf die Flasche 2 aufgeschraubt werden kann. Der Deckel weist ein Gewinde 56 auf, welches im montierten Zustand im Eingriff steht mit Gewinde 26 des Flaschenhalses 23. Bevorzugt weist der Deckel 50 dieselbe Grundform und/oder einen in etwa identischen Außendurchmesser auf, wie der Flaschenboden 21. Bevorzugt ist im Deckel ein Dichtgummi oder eine Flachdichtung vorgesehen (nicht dargestellt), um die Dichtheit des Trinkgefäßes zusätzlich zu erhöhen. Der Deckel 50 kann eine, bevorzugt verschließbare, Trinköffnung 54 an seiner Oberseite oder an einer Stelle entlang seiner Mantelfläche aufweisen. Bevorzugt ist die Trinköffnung 54 außermittig am Deckel 50 angeordnet. In der vorliegenden Ausführungsform ist die Trinköffnung 54 mit einer Verschlusskappe 51 verschließbar. Die Verschlusskappe 51 (Abbildung 4B) verfügt über zwei Zapfen 511 mit welchem sie an dem Deckel 50 befestigt wird. Bevorzugt weist der Deckel daher an seiner Oberseite zwei Bohrungen auf (nicht dargestellt), in welche die Zapfen 511 der Verschlusskappe 51 eingesetzt werden können. Bevorzugt sind die zwei Bohrungen auf einer Achse senkrecht zur Mittelachse des Deckels 50 angeordnet. Bevorzugt lassen sich zwei Schnittpunkte der Mittelachse mit einer Mantelfläche des Deckels 50 (zumindest virtuell) konstruieren. Die Trinköffnung 54 befindet sich bevorzugt auf einer Seite der Mittelachse und ist weiter bevorzugt gleich weit von den beiden Schnittpunkten der Mittelachse mit der Mantelfläche des Deckels 50 beabstandet. Die Verschlusskappe 51 ist derart konstruiert, dass sie im montierten Zustand mit den Zapfen 511 in den beiden Bohrungen des Deckels 50 gelagert ist und in einer geschlossenen Position die Trinköffnung 54 verschließen kann und in einer geöffneten Position auf einer der Trinköffnung 54 gegenüberliegenden Seite arretiert werden kann.

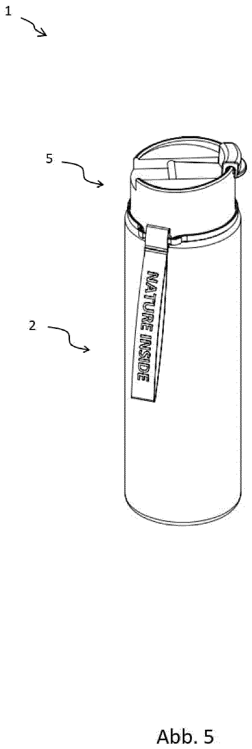

Abbildung 5 zeigt das zusammengebaute Trinkgefäß 1. Die beiden Siebe 3 und 4 sind derart im Flaschenhals 23 der Flasche 2 angeordnet, dass sie vollständig von Flasche 2 und Deckel 5 umgeben sind. Somit ist das Trinkgefäß durch den aufgeschraubten Deckel fluiddicht verschlossen.

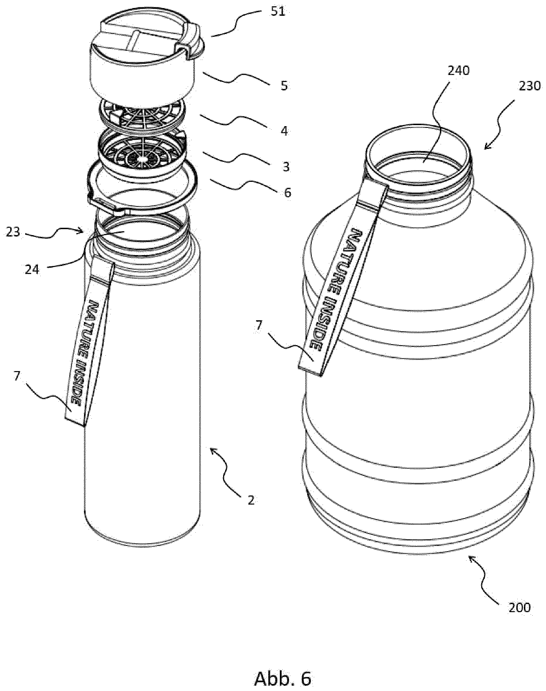

Abbildung 6 zeigt ein Ausführungsbeispiel eines erfindungsgemäßen Sets bestehend aus einem ersten Sieb 3, einem zweiten Sieb 4, einem Deckel 5, einer ersten Flasche 2, einer zweiten Flasche 200 und einem Pad (nicht dargestellt). Die im Set enthaltenen Flaschen können einen Kunststoffring 6 und einen Anhänger 7 aufweisen. Die in Abbildung 5 gezeigten Flaschen weisen unterschiedliche Volumina auf. Die erste Flasche 2 hat ein Nennvolumen von 0,5 L, die zweite Flasche 200 hat ein Nennvolumen von 2,5 L. Beide Flaschen des Sets weisen einen Flaschenhals 23, 230 auf. Die Flaschenhälse 23, 230 sind identisch ausgeführt, sodass das erste Sieb 3 und das zweite Sieb 4 entweder in den ersten Flaschenhals 23 oder in den zweiten Flaschenhals 230 eingesetzt werden können. Bevorzugt kann der Deckel 5 ebenfalls auf den ersten Flaschenhals 23 oder auf den zweiten Flaschenhals 230 aufgeschraubt werden. Das Set ist nicht auf diese zwei Flaschentypen limitiert und kann alternativ auch aus nur einer Flasche oder mehr als zwei Flaschen, etwa drei oder vier Flaschen bestehen. Die einzelnen Flaschen in einem Set können die gleichen oder unterschiedliche Volumina aufweisen oder gleiche und unterschiedliche Flaschenvolumina kombinieren. Ein Set kann beispielsweise neben einem Pad und einem ersten Sieb 3 und einem zweiten Sieb 4 zwei Flaschen mit einem einheitlichen Volumen, z.B. 0,5 L, enthalten und/oder eine Flasche mit einem anderen Volumen, z.B. 1,0 L. Ein Trinkgefäß kann durch Zukaufen von einem oder mehreren Pads und/oder einer oder mehrerer Flaschen zu einem Set erweitert werden. In jedem Set sind bevorzugt Pads mit gleichen Größenabmessungen enthalten. Die Menge an in einem Pad enthaltenen Additiven kann jedoch variieren und ist bevorzugt abhängig von den im Set enthaltenen oder für das Set verfügbaren Flaschengrößen.

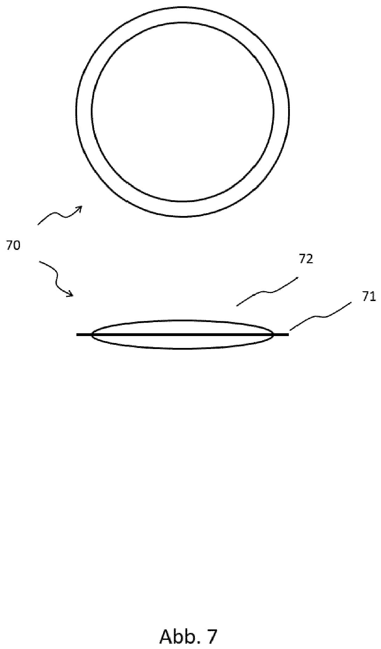

Abbildung 7 zeigt eine mögliche Formgebung für ein Pad 70 mit Zusatzstoffen. Das Pad 70 weist Filtermaterial auf, beispielsweise Filterpapier 72, welches ein Volumen einschließt. Bevorzugt ist das Pad 70 aus zwei Stücken Filterpapier 72 aufgebaut, welche miteinander verbunden sind und eine Naht 71 bilden. Die Verbindung der beiden Filterpapierstücke 72 kann bevorzugt mittels Kleben, thermischem Fügen, Crimpen oder Nähen realisiert werden. Das Pad 70 kann kreisförmig sein. Bevorzugt weist das Pad 70 die gleiche Grundform auf wie die Siebböden 32, 42. Die Naht 71 kann symmetrisch auf halber Höhe des Pads verlaufen und die Filterpapiere 72 können gewölbt geformt sein. Das Pad 70 kann alternativ auch nur zu einer Seite gewölbt sein und eine zweite eben Seite aufweisen, entlang der die Naht 71 verläuft. Bevorzugt ist eine Padform derart zu wählen, dass das Pad 70 in den Hohlraum eingelegt werden kann, welchen das erste Sieb 3 und das zweite Sieb 4 bilden. Besonders bevorzugt sollte das Pad 70 diesen Hohlraum möglichst vollständig ausfüllen, insbesondere ist gewünscht, dass das Filterpapier 72 des Pads möglichst großflächig an oder parallel zu beiden Siebböden 32, 42 (an)liegt. Im Volumen des Pads sind Additive oder Zusatzstoffe enthalten, welche bevorzugt eine oder eine Kombination der folgenden Komponenten aufweisen: Kräuter, Wurzeln, Gewürze, Nährstoffe, Spurenelemente, Vitamine, Aromen, Zucker, Salze, Mineralstoffe, Nahrungsergänzungsmittel, Fruchtsäure, Farbstoffe, Aufputschmittel wie Koffein, Creatin oder Taurin, Diätzusätze oder Medikamente.

Im Folgenden soll das erfindungsgemäße Verfahren zur Zubereitung eines Getränks mit dem Trinkgefäß 1 mit Bezugnahme auf die Abbildungen 1, 5 und 7 erläutert werden.

Zunächst wird die Flasche 2 mit bevorzugt kaltem Trinkwasser befüllt. Die Füllmenge ist durch die Flaschengröße definiert. Im vorliegenden Beispiel wird die Flasche 2 daher mit der definierten Menge eines halben Liters Trinkwasser befüllt. Anschließend wird das erste Sieb in die Flasche 2 eingelegt. Ein Pad 70 wird ausgesucht bzw. bereitgestellt, wobei die Menge der Zusatzstoffe in dem Pad mit der definierten Menge kalten Wassers korreliert. Im vorliegenden Beispiel wird daher ein Pad 70 ausgewählt, welches Zusatzstoffe zur Anreicherung eines halben Liters Wasser enthält. Welche Zusatzstoffe im Pad enthalten sind, wird vom Anwender ausgesucht. Möchte der Anwender z.B. einen erfrischenden Wachmacher, kann er beispielsweise ein Pad wählen, welches natürliches Limettenaroma, Vitamin C und Koffein enthält. Das Pad 70 mit Zusatzstoffen wird auf das erste Sieb 3 aufgelegt. Mit anderen Worten wird das Pad in den (noch geöffneten) Hohlraum eingebracht. Anschließend wird das zweite Sieb 4 in das erste Sieb gelegt. Im vorliegenden Beispiel steckt der Anwender das zweite Sieb in das erste Sieb, bis es durch die Wulst 46 arretiert ist. Eine Arretierung des zweiten Siebs kann allerdings auch ausschließlich durch den Deckel erfolgen. In jedem Fall ist das Pad 70 nun in einem geschlossenen Hohlraum zwischen erstem Sieb und zweitem Sieb.

Alternativ kann der Anwender auch zuerst ein passendes Pad aussuchen und dieses auf das erste Sieb legen und anschließend den Hohlraum schließen, indem er das zweite Sieb in das erste Sieb einlegt. Anschließend wird dieses Siebpaket, welches bereits das Pad enthält, in den Flaschenhals einer mit Trinkwasser gefüllten Flasche eingesetzt. Sobald das Trinkwasser in die Flasch2 eingefüllt wurde und die Siebe 3, 4 mit dem Pad 70 in die Flasche 2 eingesetzt wurden, wird die Flasche 2 mit dem Deckel 5 verschlossen. Die Trinköffnung 54 des Deckels 5 ist mit der Verschlusskappe 51 verschlossen. Damit ist das Trinkgefäß bevorzugt fluiddicht verschlossen. Nun wird das verschlossene Trinkgefäß vom Anwender mehrmals, bevorzugt mindestens fünfmal auf und ab geschüttelt. Dabei kommt das in der Flasche befindliche Trinkwasser derart mit dem Pad in Kontakt, dass die Zusatzstoffe aus dem Pad zumindest teilweise, bevorzugt vollständig, im Wasser aufgelöst und/oder dispergiert und/oder suspendiert werden. Damit ist die Getränkezubereitung abgeschlossen. Der Anwender kann das mit Zusatzstoffen versetzte Trinkwasser direkt aus der Trinköffnung 54 trinken. Alternativ kann der Anwender vor dem Trinken das verbrauchte Pad und/oder die beiden Siebe aus dem Trinkgefäß entnehmen. In jedem Fall kann der Anwender bei Konsum des mit Zusatzstoffen versetzten Trinkwassers bevorzugt einen gewünschten Geschmack wahrnehmen und/oder eine gewünschte Wirkung erzielen.

Anstelle eines Pads kann in diesem Verfahren auch ein Fruchtstück, beispielsweise ein Stück Obst oder Gemüse verwendet werden. Ebenfalls können Beeren in den Hohlraum zwischen den beiden Sieben eingelegt werden. So können beispielsweise eine Zitronenscheibe, eine Scheibe Gurke, ein Stück Pfirsich oder Himbeeren anstelle des Pads in den Hohlraum eingebracht werden und ihren natürlichen Geschmack an das Trinkwasser abgeben.

## Patentansprüche

1. Trinkgefäß mit einem Flüssigkeitsbehälter, einem Deckel, einem ersten Sieb und einem zweiten Sieb, wobei das erste Sieb und das zweite Sieb gemeinsam einen Hohlraum definieren, welcher dazu geeignet ist, ein Pad mit Zusatzstoffen aufzunehmen, wobei der Hohlraum eine minimale Breite aufweist, die mindestens 3 mal, bevorzugt mindestens 5 mal, besonders bevorzugt mindestens 8 mal so groß ist wie eine maximale Höhe des Hohlraums.

2. Trinkgefäß nach Anspruch 1, wobei das erste Sieb und/oder das zweite Sieb einen Siebboden mit einer Fläche von mindestens 900 mm², bevorzugt mindestens 1.200 mm² und besonders bevorzugt mindestens 1.500 mm² aufweisen.

3. Trinkgefäß nach einem der Ansprüche 1 oder 2, wobei jede Perforierung eine Querschnittsfläche zwischen 5 mm² und 50 mm², bevorzugt zwischen 10 mm² und 40 mm² aufweist und/oder wobei Perforierungen in mindestens zwei, bevorzugt mindestens drei und maximal fünf Größen vorgesehen sind.

4. Trinkgefäß nach einem der Ansprüche 1 bis 3, wobei der Hohlraum eine Höhe von maximal 15 mm, bevorzugt maximal 10 mm, besonders bevorzugt maximal 5 mm aufweist, und/oder wobei die minimale Breite des Hohlraums mindestens 30 mm beträgt.

5. Trinkgefäß nach einem der Ansprüche 1 bis 4, wobei das erste Sieb und/oder das zweite Sieb ein Griffelement, bevorzugt einen Griffhaken aufweisen, welcher am Rand des jeweiligen Siebs angeordnet ist und in einer Richtung senkrecht zu einer Grundfläche des jeweiligen Siebs vorsteht.

6. Trinkgefäß nach einem der Ansprüche 1 bis 5, wobei der Flüssigkeitsbehälter und/oder der Deckel ein Gewinde aufweist, wobei der Deckel geeignet ist, am Flüssigkeitsbehälter befestigt zu werden, bevorzugt derart, dass das erste und das zweite Sieb durch Flüssigkeitsbehälter und Deckel fixiert sind.

7. Trinkgefäß nach einem der Ansprüche 1 bis 6, wobei der Deckel eine Öffnung aufweist, welche bevorzugt außermittig angeordnet und verschließbar ist.

8. Trinkgefäß nach Anspruch 7, wobei der Deckel eine Verschlusskappe aufweist, welche derart geformt und, bevorzugt um eine Achse parallel zur Deckelgrundfläche drehbar, auf dem Deckel angeordnet ist, dass sie in einer geschlossenen Stellung die Öffnung verschließt und in einer geöffneten Stellung, bevorzugt auf einer der Öffnung gegenüberliegenden Deckelseite, arretiert werden kann.

9. Set mit einem ersten Trinkgefäß nach einem der vorstehenden Ansprüche und einem ersten Pad mit Zusatzstoffen, bevorzugt wobei die Menge der Zusatzstoffe in dem ersten Pad mit dem Volumen des in das erste Trinkgefäß eingebundenen Flüssigkeitsbehälters korreliert.

10. Set nach Anspruch 9, welches mindestens einen zweiten Flüssigkeitsbehälter enthält, welcher ein anderes Volumen aufweist, als der im ersten Trinkgefäß enthaltene Flüssigkeitsbehälter, wobei bevorzugt alle Flüssigkeitsbehälter des Sets geeignet sind, mit dem selben ersten und dem selben zweiten Sieb sowie bevorzugt mit dem selben Deckel ein Trinkgefäß zu bilden.

11. Set nach Anspruch 10, welches ein zweites Pad mit Zusatzstoffen umfasst, wobei die Menge der Zusatzstoffe in dem zweiten Pad mit dem Volumen des zweiten Flüssigkeitsbehälters korreliert.

12. Verfahren zum Zubereiten eines Getränks mit einem Trinkgefäß nach einem der Ansprüche 1 bis 11, mit den folgenden Schritten:
a. Einfüllen von, bevorzugt kaltem, Wasser in den Flüssigkeitsbehälter;
b. Einbringen eines Pads mit Zusatzstoffen und/oder mindestens eines Stücks Obst oder Gemüse in den Hohlraum;
c. Schütteln des Trinkgefäßes.

13. Verfahren nach Anspruch 12, wobei Schritt b beinhaltet:
Einlegen des ersten Siebs in den Flüssigkeitsbehälter, anschließendes Auflegen des Pads und/oder des mindestens einen Stücks Obst oder Gemüse auf das erste Sieb, Schließen des Hohlraums mit dem zweiten Sieb; oder
Auflegen des Pads auf das erste Sieb, anschließend Schließen des Hohlraums mit dem zweiten Sieb, danach Einlegen der beiden Siebe mit dem Pad und/oder dem mindestens einen Stück Obst oder Gemüse in den Flüssigkeitsbehälter.

14. Verfahren nach einem der Ansprüche 12 bis 13, wobei das Pad mit Zusatzstoffen wasserlöslich ist und/oder ein Filtermaterial aufweist und eine oder eine Kombination der folgenden Komponenten enthält: Kräuter, Wurzeln, Gewürze, Vitamine, Aromen, Zucker, Salze, Mineralstoffe, Fruchtsäure, Farbstoffe, Koffein, Creatin, Taurin, Medikamente, Spurenelemente, Nahrungsergänzungsmittel.

15. Verfahren zur Zubereitung eines Kaltgetränks in einem Trinkgefäß mit den folgenden Schritten:
a. Befüllen eines Trinkgefäßes mit einer definierten Menge kalten Wassers;
b. Bereitstellen eines Pads mit Zusatzstoffen, wobei die Menge der Zusatzstoffe in dem Pad mit der definierten Menge kalten Wassers korreliert;
c. Einbringen des Pads in das Trinkgefäß derart, dass die Zusatzstoffe aus dem Pad zumindest teilweise, bevorzugt vollständig, im Wasser aufgelöst und/oder dispergiert und/oder suspendiert werden.

## Geänderte Patentansprüche

### Geänderte Patentansprüche gemäss Regel 137(2) EPÜ.

1. Trinkgefäß (1) mit einem Flüssigkeitsbehälter (2), einem Deckel (5), einem ersten Sieb (3; 30) und einem zweiten Sieb (4; 40), wobei das erste Sieb (3; 30) und das zweite Sieb (4; 40) gemeinsam einen Hohlraum definieren, welcher dazu geeignet ist, ein Pad (70) mit Zusatzstoffen aufzunehmen, wobei der Hohlraum eine minimale Breite aufweist, die mindestens 3 mal so groß ist wie eine maximale Höhe des Hohlraums, wobei das erste und/oder zweite Sieb (3; 30, 4;40) Perforierungen aufweisen und wobei jede Perforierung eine Querschnittsfläche zwischen 5 mm² und 50 mm² aufweist.

2. Trinkgefäß nach Anspruch 1, wobei das erste Sieb und/oder das zweite Sieb (3; 30, 4;40) einen Siebboden (32, 42) mit einer Fläche von mindestens 900 mm², bevorzugt mindestens 1.200 mm² und besonders bevorzugt mindestens 1.500 mm² aufweisen.

3. Trinkgefäß nach einem der Ansprüche 1 oder 2, wobei jede Perforierung eine Querschnittsfläche zwischen 10 mm² und 40 mm² aufweist und/oder wobei Perforierungen in mindestens zwei, bevorzugt mindestens drei und maximal fünf Größen vorgesehen sind.

4. Trinkgefäß nach einem der Ansprüche 1 bis 3, wobei der Hohlraum eine Höhe von maximal 15 mm, bevorzugt maximal 10 mm, besonders bevorzugt maximal 5 mm aufweist, und/oder wobei die minimale Breite des Hohlraums mindestens 30 mm beträgt.

5. Trinkgefäß nach einem der Ansprüche 1 bis 4, wobei das erste Sieb und/oder das zweite Sieb (3; 30, 4;40) ein Griffelement, bevorzugt einen Griffhaken (34, 44) aufweisen, welcher am Rand des jeweiligen Siebs angeordnet ist und in einer Richtung senkrecht zu einer Grundfläche (31, 41) des jeweiligen Siebs vorsteht.

6. Trinkgefäß nach einem der Ansprüche 1 bis 5, wobei der Flüssigkeitsbehälter (2) und/oder der Deckel (5) ein Gewinde (26, 56) aufweist, wobei der Deckel (5) geeignet ist, am Flüssigkeitsbehälter (2) befestigt zu werden, bevorzugt derart, dass das erste und das zweite Sieb (3; 30, 4;40) durch Flüssigkeitsbehälter (2) und Deckel (5) fixiert sind.

7. Trinkgefäß nach einem der Ansprüche 1 bis 6, wobei der Deckel (5) eine Öffnung (54) aufweist, welche bevorzugt außermittig angeordnet und verschließbar ist.

8. Trinkgefäß nach Anspruch 7, wobei der Deckel (5) eine Verschlusskappe (51) aufweist, welche derart geformt und, bevorzugt um eine Achse parallel zur Deckelgrundfläche drehbar, auf dem Deckel (5) angeordnet ist, dass sie in einer geschlossenen Stellung die Öffnung verschließt und in einer geöffneten Stellung, bevorzugt auf einer der Öffnung gegenüberliegenden Deckelseite, arretiert werden kann.

9. Set mit einem ersten Trinkgefäß nach einem der vorstehenden Ansprüche und einem ersten Pad (70) mit Zusatzstoffen, bevorzugt wobei die Menge der Zusatzstoffe in dem ersten Pad (70) mit dem Volumen des in das erste Trinkgefäß eingebundenen Flüssigkeitsbehälters (2) korreliert.

10. Set nach Anspruch 9, welches mindestens einen zweiten Flüssigkeitsbehälter (200) enthält, welcher ein anderes Volumen aufweist, als der im ersten Trinkgefäß enthaltene Flüssigkeitsbehälter (2), wobei bevorzugt alle Flüssigkeitsbehälter (2, 200) des Sets geeignet sind, mit dem selben ersten und dem selben zweiten Sieb (3; 30, 4;40) sowie bevorzugt mit dem selben Deckel (5) ein Trinkgefäß (1) zu bilden.

11. Set nach Anspruch 10, welches ein zweites Pad mit Zusatzstoffen umfasst, wobei die Menge der Zusatzstoffe in dem zweiten Pad mit dem Volumen des zweiten Flüssigkeitsbehälters (200) korreliert.

12. Verfahren zum Zubereiten eines Getränks mit einem Trinkgefäß (1) nach einem der Ansprüche 1 bis 11, mit den folgenden Schritten:
a. Einfüllen von, bevorzugt kaltem, Wasser in den Flüssigkeitsbehälter (2; 200);
b. Einbringen eines Pads (70) mit Zusatzstoffen und/oder mindestens eines Stücks Obst oder Gemüse in den Hohlraum;
c. Schütteln des Trinkgefäßes (1).

13. Verfahren nach Anspruch 12, wobei Schritt b beinhaltet:
Einlegen des ersten Siebs (3; 30) in den Flüssigkeitsbehälter, anschließendes Auflegen des Pads (70) und/oder des mindestens einen Stücks Obst oder Gemüse auf das erste Sieb (3; 30), Schließen des Hohlraums mit dem zweiten Sieb (4;40); oder
Auflegen des Pads (70) auf das erste Sieb (3; 30), anschließend Schließen des Hohlraums mit dem zweiten Sieb (4;40), danach Einlegen der beiden Siebe mit dem Pad (70) und/oder dem mindestens einen Stück Obst oder Gemüse in den Flüssigkeitsbehälter (2).

14. Verfahren nach einem der Ansprüche 12 bis 13, wobei das Pad (70) mit Zusatzstoffen wasserlöslich ist und/oder ein Filtermaterial (72) aufweist und eine oder eine Kombination der folgenden Komponenten enthält: Kräuter, Wurzeln, Gewürze, Vitamine, Aromen, Zucker, Salze, Mineralstoffe, Fruchtsäure, Farbstoffe, Koffein, Creatin, Taurin, Medikamente, Spurenelemente, Nahrungsergänzungsmittel.
